# EUROPEAN PATENT SPECIFICATION

(11) **EP 1 912 270 B1**
(45) Date of publication and mention of the grant of the patent: **16.09.2009**
(21) Application number: 06781790.8
(22) Date of filing: 27.07.2006
(51) Int. Cl.: H01M 4/02, H01M 4/38, H01M 4/48, H01M 4/58, H01M 10/40

(54) **NEGATIVE ELECTRODE FOR LITHIUM SECONDARY BATTERY AND METHOD FOR PRODUCING SAME**
NEGATIVELEKTRODE FÜR EINE LITHIUM-SEKUNDÄRBATTERIE UND HERSTELLUNGSVERFAHREN DAFÜR
ÉLECTRODE NÉGATIVE POUR UNE BATTERIE SECONDAIRE AU LITHIUM ET SON PROCÉDÉ DE FABRICATION

(30) Priority: 02.08.2005 JP 2005223586
(43) Date of publication of application: 16.04.2008
(73) Proprietor: Panasonic Corporation, Kadoma-shi Osaka 571-8501 (JP)
(72) Inventor: HONDA, Kazuyoshi c/o Matsushita Electric Industrial Co., Ltd., IPR, Osaka 540-6207 (JP); KOGETSU, Yasutaka c/o Matsushita Electric Industrial Co., Ltd, IPR, Osaka 540-6207 (JP); UGAJI, Masaya c/o Matsushita Electric Industrial Co., Ltd., IPR, Osaka 540-6207 (JP); TAKAHASHI, Keiichi c/o Matsushita Electric Industrial Co., Ltd., IPR, Osaka 540-6207 (JP); MINO, Shinji c/o Matsushita Electric Industrial Co., Ltd., IPR, Osaka 540-6207 (JP); NAGAO, Nobuaki c/o Matsushita Electric Industrial Co., Ltd., Osaka 540-6207 (JP); SHIBUTANI, Satoshi c/o Matsushita Electric Industrial Co., Ltd., IPR, Osaka 540-6207 (JP)
(74) Representative: TBK-Patent
(86) International application number: PCT/JP2006/314879
(87) International publication number: WO 2007/015419

(56) References cited:
- EP-A- 1 231 653
- WO-A1-20/04049476
- WO-A1-20/05008809
- JP-A- 09 213 366
- JP-A- 2003 077 463
- JP-A- 2003 187 806
- JP-A- 2004 031 217
- JP-A- 2004 319 469
- JP-A- 2005 100 959
- JP-A- 2005 108 523
- JP-A- 2005 141 992
- JP-A- 2005 196 970

## Description

### Technical Field

The present invention relates to a negative electrode for a lithium secondary battery including a current collector and an active material layer carried on the current collector, where the active material layer includes particles that are grown into columnar form and the columnar particles include silicon as a constituent element.

### Background Art

With the recent development of portable devices such as personal computers and cellular phones, there is an increasing demand for batteries used as the power source for such devices. The batteries used in such applications are required to operate at room temperature and provide a high energy density and an excellent cycle characteristic.

To meet such requirements, new high-capacity active materials are being developed for each of the positive electrode and the negative electrode. Among them, a simple substance of silicon (Si) or tin (Sn), which provides a very high capacity, and oxides or alloys thereof are viewed as promising negative electrode active materials.

A problem with silicon used as a negative electrode active material is deformation of the negative electrode. Upon charge/discharge, the negative electrode active material significantly expands and contracts due to insertion and elimination of lithium (Li), so that the negative electrode becomes significantly distorted and warped. As a result, space is created between the negative electrode and the separator, which may result in uneven charge/discharge reaction and poor cycle characteristic.

To address such problem, it has been proposed to provide space in a negative electrode for easing the stress caused by the expansion of an active material, in order to suppress distortion and warp and therefore degradation of cycle characteristic. For example, Patent Document 1 proposes forming columnar particles of silicon on a current collector. Also, Patent Document 2 proposes pattern formation in which an active material that is alloyable with lithium is regularly disposed on a current collector. Patent Document 3 proposes inclining the longitudinal direction of columnar crystal grains relative to a plane perpendicular to the main surface of a negative electrode.
Patent Document 1: Japanese Laid-Open Patent Publication No. 2003-303586
Patent Document 2: Japanese Laid-Open Patent Publication No. 2004-127561
Patent Document 3: Japanese Laid-Open Patent Publication No. 2005-196970

### Disclosure of the Invention

### Problem to be Solved by the Invention

In Patent Documents 1 and 2, columnar structures of a negative electrode active material are formed on a sheet-shaped current collector such that they stand straight in the direction of the normal to the current collector. Thus, much of the positive electrode active material does not face the negative electrode active material, and faces the exposed part of the negative electrode current collector. Hence, lithium released from the positive electrode active material during charging tends to deposit on the exposed part of the negative electrode current collector without being absorbed in the negative electrode active material. As a result, upon discharge, lithium is not efficiently released from the negative electrode, so that the coulombic efficiency lowers.

Also, since only the positive electrode active material facing the negative electrode active material readily reacts upon discharge, the substantial discharge capacity decreases and part of the positive electrode active material may be overdischarged. When the reaction proceeds unevenly in repeated charge/discharge cycles, the positive electrode active material that has failed to discharge tends to become overcharged, while an increasing amount of the positive electrode active material becomes overdischarged. As a result, the ratio of side reactions increases, the discharge capacity decreases, and the battery deteriorates. Particularly when a high-rate charge/discharge is performed at a large current value, the cycle characteristic significantly lowers.

### Means for Solving the Problem

The present invention relates to a negative electrode for a lithium secondary battery including a sheet-shaped current collector and an active material layer carried on the current collector. The active material layer includes a plurality of columnar particles, and the columnar particles include silicon element. The columnar particles are inclined relative to the direction of the normal to the current collector.
The present invention also pertains to a lithium secondary battery including a positive electrode capable of absorbing and desorbing lithium ions, the above-described negative electrode, a separator interposed between the positive electrode and the negative electrode, and a lithium-ion conductive electrolyte.

The angle θ formed between the columnar particles and the direction of the normal to the current collector is desirably 10°≦ θ ≦ 80°. Desirably, the angle θ formed between the columnar particles and the direction of the normal to the current collector is obtained as the average value of measurement values of, for example, at least 10 columnar particles.

As used herein, the direction of the normal to the current collector refers to the direction perpendicular to the main flat surface (also referred to as simply the "surface") of the current collector. The angle formed between the columnar particles and the direction of the normal to the current collector as used herein refers to the angle formed between the grow direction of the columnar particles and the direction of the normal to the current collector. The main flat surface of the current collector is flat by visual inspection, but it is preferable that it be microscopically irregular. When the columnar particles are grown, for example, by deposition or sputtering, the grow direction of the columnar particles is determined by the angle of inclination formed between the surface of the current collector on which the columnar particles are to be deposited and a horizontal plane. At this time, a deposition source or target is disposed, for example, vertically below the current collector.

The columnar particles do not need to be completely cylindrical or prismatic particles. The shape of the columnar particles is not particularly limited and can be roughly columnar. The columnar particles may have different shapes. The diameter (width) of the columnar particles may change in the longitudinal direction. One end of the columnar particles (the end corresponding to the bottom of the cylindrical shape) is joined to the surface of the current collector. As the distance from the joint with the current collector increases, the diameter of the columnar particles may increase.

The difference between the area A of the current collector on which the active material layer is carried and the area B of the active material layer orthogonally projected from the above-mentioned direction of the normal: A-B is desirably 60% or less of the area A, more desirably 30% or less, and most preferably 0%. The ratio S(%) obtained by 100 × {(A-B)/A} is hereinafter referred to as the current collector exposure ratio. The current collector exposure ratio S represents the amount of the exposed area of the current collector that can be seen when the active material layer is observed from the direction of the normal to the current collector. A lower current collector exposure ratio S is more preferable since uneven electrode reaction is suppressed.

In a cross-section of the active material layer parallel to the columnar particles, the center-to-center distance (i.e., pitch) of the mutually adjacent columnar particles is desirably, for example, 0.1 µm or more and 200 µm or less at the center height of the mutually adjacent columnar particles. As used herein, the center height refers to half the height of the columnar particles.

As used herein, "a cross-section parallel to the columnar particles" refers to a cross-section of the current collector and the active material layer which is parallel to the direction of the normal to the current collector and the grow direction of the columnar particles. Also, the center-to-center distance of the mutually adjacent columnar particles can be obtained by selecting, for example, at least 10 pairs of mutually adjacent columnar particles in the above-mentioned cross-section, obtaining the center-to-center distance of these particles at the center height thereof, and averaging the obtained values of the distance. The cross-section is observed using, for example, a scanning electron microscope (SEM). The center-to-center distance of the columnar particles at the center height thereof is measured in the direction parallel to the above-mentioned cross-section and the main flat surface of the current collector. When the mutually adjacent columnar particles have different heights, half the average height thereof is used as the center height.

The porosity P of the active material layer is desirably 10%<P<70%.
The porosity P can be measured using, for example, a mercury porosimeter. In a measurement using a mercury porosimeter, mercury intrudes into the pores of the negative electrode. At this time, the porosity P(%) is calculated as 100× {the volume of mercury having intruded into the pores /(the true volume of the active material layer + the volume of mercury having intruded into the pores)} . The true volume of the active material layer can be calculated from the weight of the active material layer and the specific gravity of the columnar particles. The measurement method of the porosity P is not limited to the measurement method using a mercury porosimeter. For example, the porosity P can also be calculated from the weight and thickness of the active material layer in a certain area and the density of the active material.

The active material layer includes at least one selected from the group consisting of a silicon alloy, a compound containing silicon and oxygen, and a compound containing silicon and nitrogen. The active material layer may be composed only of one of them, or the active material layer may be composed of two or more of them. Examples of an active material layer composed of two or more of them include an active material layer including a compound containing silicon, oxygen, and nitrogen and an active material layer including a plurality of compounds containing silicon and oxygen at different silicon/oxygen ratios.

The silicon alloy contains silicon and a metal element M, and the metal element M desirably includes a metal element that is not alloyable with lithium. The metal element M is desirably at least one selected from the group consisting of, for example, titanium, copper, and nickel. The silicon alloy may contain only one kind of metal element M, or the silicon alloy may contain two or more kinds thereof.

The compound containing silicon and oxygen desirably has a composition represented by general formula (1): SiOₓ where 0 < x < 2. Also, the compound containing silicon and nitrogen desirably has a composition represented by general formula (2) : SiN_{y} where 0<y<4/3.

The surface roughness (ten-point height) Rz of the surface (i.e., main flat surface) of the current collector is desirably 0.1 to 100 µm. The surface roughness Rz can be measured by the method defined by Japanese Industrial Standards (JIS) B0601-1994. The current collector is preferably, for example, electrolytic copper foil, electrolytic copper alloy foil, electrolytic copper foil subjected to a surface roughening treatment, or rolled copper foil subjected to a surface roughening treatment. As used herein, a surface roughening treatment refers to, for example, a treatment in which copper foil is immersed in a solution for partial chemical etching to produce asperities, or a treatment in which copper particles are electrolytically deposited on copper foil to produce asperities.

The thickness t of the active material layer is preferably 0.1 µm≦t≦100 µm.

The diameter of the columnar particles is not particularly limited. However, in terms of preventing the columnar particles from becoming cracked or separated from the copper foil due to expansion during charging, the diameter is preferably 100 µm or less, and more preferably 1 to 50 µm, when the active material contains or does not contain lithium corresponding to irreversible capacity. The diameter of the columnar particles can be obtained by selecting, for example, 2 to 10 columnar particles, obtaining their diameters (the diameter perpendicular to the grow direction) at the center height thereof, and averaging the obtained values.

The mutually adjacent columnar particles may combine together in the course of growing. However, since the respective columnar particles start to grow at different positions, they are separate near the surface of the current collector and different in the state of crystal growth. Hence, among combined columnar particles, boundaries are discernable and it is thus possible to obtain the diameter of each of the columnar particles.

It is desirable to measure the parameters, namely the center-to-center distance (pitch) of the mutually adjacent columnar particles, the thickness of the active material layer, the porosity P, and the diameter of the columnar particles, when the negative electrode active material contains lithium corresponding to irreversible capacity or contains no lithium. In other words, it is desirable to measure these parameters using a negative electrode that contains no lithium corresponding to reversible capacity (the state of the reversible capacity being 0).

In particular, in the case of measuring the porosity with a mercury porosimeter, it is desirable to measure the porosity P when the active material contains no lithium. In this case, by correcting the value of the porosity P using a volume difference between the case where lithium corresponding to irreversible capacity is contained and the case where no lithium is contained, it is also possible to obtain the porosity P' for the negative electrode active material that contains lithium corresponding to irreversible capacity.

The present invention also relates to a method for producing a negative electrode for a lithium secondary battery. This method includes:(a) preparing a sheet-shaped current collector with a surface roughness Rz of 2 µm or more and 20 µm or less; and (b) projecting silicon to the current collector for deposition from a direction that forms an angle φ with the direction of the normal to the current collector, to form an active material layer containing silicon element, where 20° ≦ φ ≦ 85°.

The silicon projected to the current collector may be in any state, for example, in the form of atom, radical, cluster, or compound.
The step of projecting silicon to the current collector is performed by at least one selected from the group consisting of, for example, deposition, sputtering, and chemical vapor deposition.

In the case of forming an active material layer that includes a compound containing silicon and oxygen (e.g., a compound having a composition represented by general formula (1) : SiOₓ where 0<x<2) , silicon is projected with oxygen to the current collector.

In one embodiment of the production method of the present invention, the step of projecting silicon with oxygen to the current collector is a step of projecting silicon to the current collector in a reduced pressure atmosphere containing oxygen. The oxygen may be in any state, for example, in the form of molecule, atom, radical, or ion.

In the case of forming an active material layer that includes an alloy of silicon and a metal element M, silicon and the metal element M are projected to the current collector. For example, using a deposition source or target containing silicon and a metal element M in a predetermined atomic ratio, an active material layer is formed by deposition or sputtering. The metal element M is preferably titanium, copper, nickel, or the like.

### Effect of the Invention

According to the present invention, since the columnar particles forming the negative electrode active material layer are inclined relative to the direction of the normal to the current collector, the exposed part of the negative electrode current collector seen from the positive electrode side significantly decreases. This increases the opposing areas of the positive electrode active material and the negative electrode active material, makes the electrode reaction even, enhances the coulombic efficiency, and improves the cycle characteristic.

Also, in the case of adding lithium to the negative electrode in an amount corresponding to irreversible capacity before a battery is assembled, since the exposed part of the negative electrode current collector is markedly small, the amount of lithium remaining on the current collector decreases. It is thus possible to reduce the loss of the material, suppress the side reaction of electrolyte, and maintain good battery performance over an extend period of time. The addition of lithium in an amount corresponding to irreversible capacity is made by affixing lithium metal to the negative electrode or depositing lithium metal thereon.

When the columnar particles are inclined relative to the direction of the normal to the current collector, the contact area between the negative electrode active material and the electrolyte increases, which is also advantageous to high-rate charge/discharge.
When the porosity P of the active material layer is 10% or more and 70% or less, the stress caused by the expansion and contraction of the columnar particles can be sufficiently eased and a sufficient amount of electrolyte can be brought into contact with the columnar particles. It is also possible to ensure that the negative electrode has sufficient energy density.

When the columnar particles are amorphous, it is possible to prevent the columnar particles from becoming cracked or broken due to expansion and contraction upon charge/discharge. Hence, when the charge/discharge cycle is repeated, good current collection can be readily achieved and an excellent cycle characteristic can be obtained.

### Brief Description of the Drawings

FIG. 1 is a longitudinal sectional view of an example of a layered-type lithium secondary battery;
FIG. 2 is a schematic cross-sectional view showing the structure of a negative electrode for a lithium secondary battery of the present invention;
FIG. 3 is a diagram for illustrating a method for determining the angle θ between columnar particles and the direction of the normal to a current collector;
FIG. 4 is a schematic cross-sectional view showing the structure of curved columnar particles;
FIG. 5 is a schematic enlarged view of a top face of a negative electrode for a lithium secondary battery of the present invention;
FIG. 6 is a schematic view of an example of a production device of a negative electrode for a lithium secondary battery of the present invention; and
FIG. 7 is a SEM photo of a cross-section of a negative electrode for a lithium secondary battery of the present invention, which is parallel to columnar particles.

### Best Mode for Carrying Out the Invention

The present invention is hereinafter described with reference to drawings, but the present invention is not to be construed as being limited to the following description as long as it has the features recited in CLAIMS.

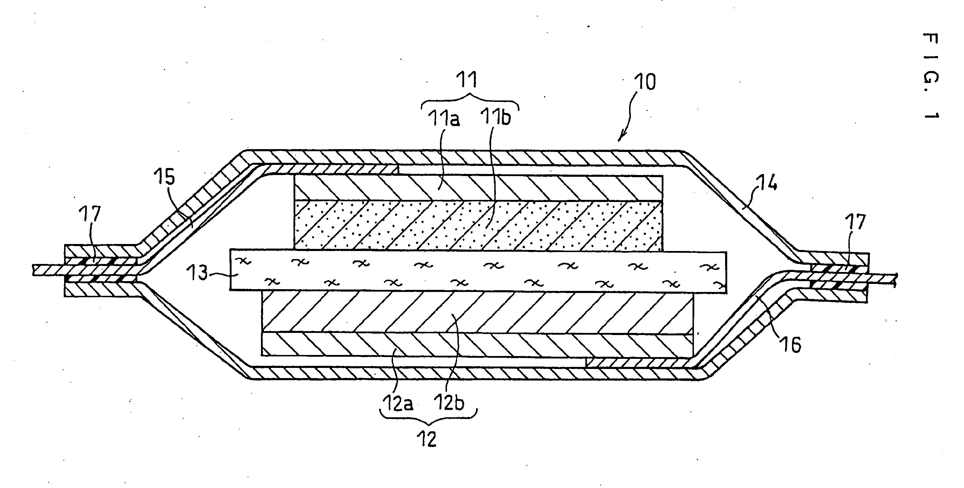

FIG. 1 is a schematic cross-sectional view of a layered-type lithium secondary battery as an example of the battery of the present invention.
A battery 10 includes an electrode assembly composed of a positive electrode 11, a negative electrode 12, and a separator 13 interposed therebetween. The electrode assembly and a lithium-ion conductive electrolyte are housed in an exterior case 14. The lithium-ion conductive electrolyte is impregnated into the separator 13. The positive electrode 11 is composed of a positive electrode current collector 11a and a positive electrode active material layer 11b carried on the positive electrode current collector 11a. The negative electrode 12 is composed of a negative electrode current collector 12a and a negative electrode active material layer 12b carried on the negative electrode current collector 12a. One end of a positive electrode lead 15 and one end of a negative electrode lead 16 are connected to the positive electrode current collector 11a and the negative electrode current collector 12a, respectively, and the other ends thereof are drawn to the outside of the exterior case 14. The opening of the exterior case 14 is sealed with a resin material 17.

The positive electrode active material layer 11b releases lithium during charging and absorbs lithium released by the negative electrode active material layer 12b during discharging. The negative electrode active material layer 12b absorbs the lithium released by the positive electrode active material during charging and releases the lithium during discharging.

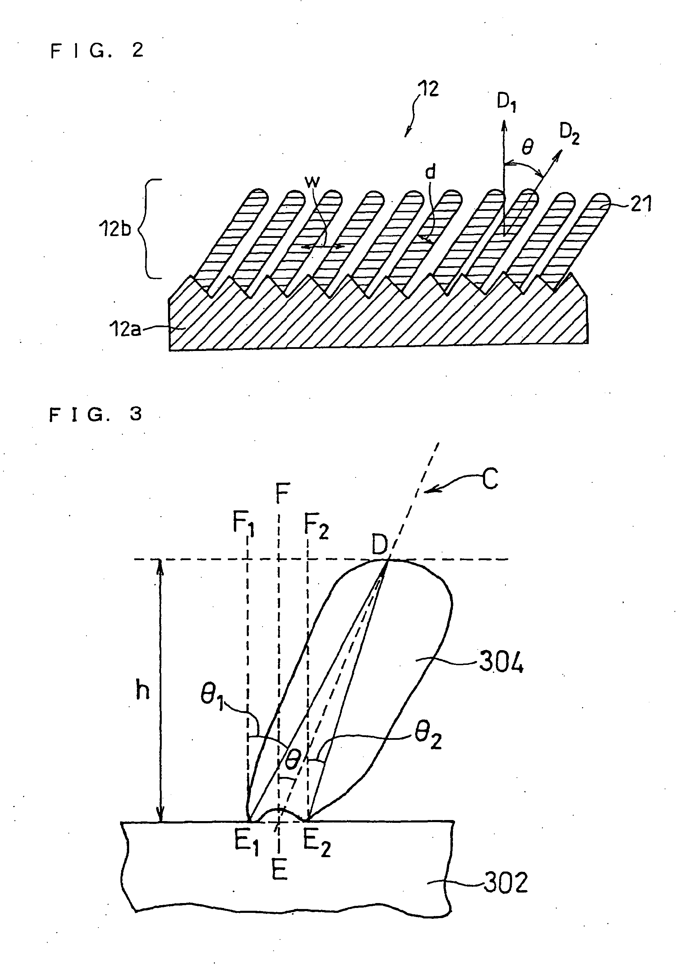

FIG. 2 is a schematic longitudinal cross-sectional view of the structure of a negative electrode as an example of the negative electrode of the present invention.
The negative electrode current collector 12a has asperities on the surface thereof. The negative electrode active material layer 12b is composed of a plurality of columnar particles 21, and the columnar particles 21 are grown slantwise relative to the direction D1 of the normal to the current collector 12a. The direction D1 of the normal to the current collector 12a forms an angle θ with the grow direction D2 of the columnar particles 21.

The angle θ tends to gradually decrease as the charge/discharge of the battery proceeds. It is thus preferable to determine the angle θ using a negative electrode immediately after the production thereof, a negative electrode included in an unused battery immediately after the production thereof, or a negative electrode included in a battery that has been subjected to a charge/discharge only 10 times or less.

The columnar particles 21 may be monocrystalline particles, polycrystalline particles comprising a plurality of crystallites (crystal grains), nanocrystalline particles with a crystallite size of 100 nm or less, or amorphous. The columnar particles 21 may include nanocrystals with a crystallite size of 100 nm or less. It is possible to confirm that the columnar particles are amorphous or that the columnar particles do not contain crystals with a crystallite size of more than 100 nm by using, for example, an X-ray diffraction (XRD) or transmission electron microscope (TEM). For example, in a diffraction pattern of an active material layer in XRD measurement, when no sharp peak appears and only a broad halo pattern appears, such columnar particles can be judged to be substantially amorphous.

Even when the mutually adjacent columnar particles combine together in the course of growing, the respective columnar particles start to grow at different positions. Thus, the number of the columnar particles can be regarded as being equal to the number of points where they started to grow.

It should be noted that although FIG. 1 shows an example of layered-type batteries, the negative electrode for a lithium ion secondary battery of the present invention is applicable to, for example, cylindrical and prismatic batteries having spiral-type electrode assemblies. With respect to the form of the layered-type batteries, three or more layers may be formed by laminating one or more positive electrodes each having a positive electrode active material layer on one side or both sides and one or more negative electrodes each having a negative electrode active material layer on one side or both sides, so that all the positive electrode active material layers are opposed to the negative electrode active material layers and that all the negative electrode active material layers are opposed to the positive electrode active material layers. The slanting directions of the columnar particles in the respective negative electrode active material layers may be the same or different. Also, the slanting directions of the respective columnar particles in the same negative electrode may be different. When a negative electrode has a negative electrode active material layer on both sides, the slanting directions of the columnar particles on both sides may be the same or different.

By inclining the columnar particles 21 such that they form an angle θ with the direction D1 of the normal to the current collector 12a, the ratio of the exposed part of the negative electrode current collector 12a seen from the positive electrode active material layer 11a decreases or reaches zero. Thus, the coulombic efficiency increases and the possibility that lithium may deposit on the negative electrode current collector also decreases. That is, uneven electrode reaction is suppressed and the charge/discharge cycle characteristic improves. In particular, a sharp decline in cycle characteristic in the case of large-current, high-rate charge/discharge is significantly suppressed.

The angle θ between the columnar particles 21 and the direction D1 of the normal to the current collector 12a should be 0<θ. In order to obtain sufficient effects of the invention, it is preferable, for example, that 10°≦ θ ≦ 80°. When θ approaches 90°, it becomes gradually difficult for the columnar particles to be carried on the current collector. Also, when too much part of the respective columnar particles is shielded by other columnar particles, the effect of suppressing degradation of high-rate characteristic may decrease. It is thus more desirable that 10°≦ θ ≦ 80°.

Referring now to FIG. 3, an exemplary method for determining the angle θ between the columnar particles and the direction of the normal to the current collector is described.
First, an active material layer is cut parallel to the direction of the normal to the current collector and parallel to the grow direction of the columnar particles, and the cross-section is observed with a SEM, TEM, or the like. Alternatively, an active material layer is cut parallel to the direction of the normal to the current collector and in such a manner that the length of the center line, described below, is maximum, and the cross-section (this cross-section can be regarded as the same as the cross-section parallel to the direction of the normal to the current collector and parallel to the grow direction of the columnar particles) is observed.

In a columnar particle 304, a point D furthest from the surface of a current collector 302 (the point at which the distance h is longest in FIG. 3) is determined. Then, end points E₁ and E₂ of the columnar particle 304 on the surface of the current collector 302 are determined. A straight line F₁ perpendicular to the surface of the current collector 302 is drawn from the point E₁; and a straight line F₂ perpendicular to the surface of the current collector 302 is drawn from the point E₂. The angle formed between the straight line connecting the point E₁ and the point D and the straight line F₁ is defined as θ₁, and the angle formed between the straight line connecting the point E₂ and the point D and the straight line F₂ is defined as θ₂. The angle θ is given by (θ₁+θ₂)/2.

A straight line C connecting the point D and a midpoint E between the point E₁ and the point E₂ on the surface of the current collector 302 can be defined as the grow direction of the columnar particle 304. Thus, the angle θ may be defined as the angle formed between the straight line connecting the midpoint E and the point D and a straight line F that is drawn from the midpoint E perpendicularly to the surface of the current collector 302. The angle θ can be obtained by measuring at least 10 columnar particles 304 and averaging the obtained values.

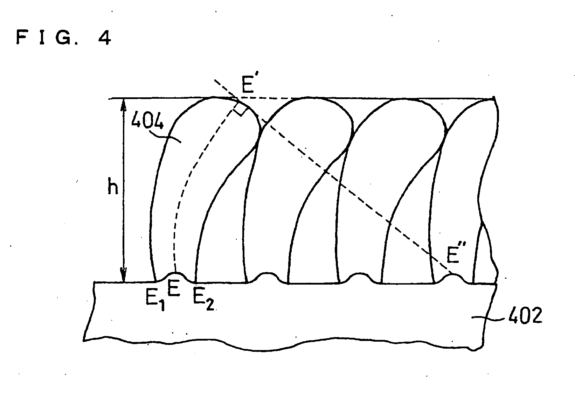

The angle θ may change with the growth of the columnar particles. That is, the columnar particles may be curved as illustrated in FIG. 4. The degree of curve is not particularly limited. For example, the distance from.a current collector 402 to the furthest point of a columnar particle 404 is defined as h, and the average radius of the center line of the columnar particle 404 is defined as R. The columnar particle 404 may be curved, for example, such that R satisfies the relation 0.5h≦R≦30h. For example, it may be curved such that R satisfies the relation 1h≦R≦10h, or such that R satisfies the relation 2h≦R≦5h. The angle θ may change in stages or in succession, or θ may increase or decrease in any manner.

The center line of the columnar particle 404 can be determined, for example, as follows.
In FIG. 4, the midpoint of the curve between the point E₁ and the point E₂ along the contour of the columnar particle 404 (the curve that does not pass through the point E in FIG. 4) is defined as a point E'. Next, on the curve between the point E' and the point E₁ along the contour of the columnar particle and the curve between the point E' and the point E₂ along the contour of the columnar particle, points equidistant from the point E' are determined and their midpoints are determined. The locus of these midpoints is defined as the center line.

The average radius R of the center line can be determined, for example, as follows.
From the point E', a straight line that intersects with the center line at right angles is drawn, and a point E" at which this straight line intersects with the surface of the current collector 402 is obtained. The average of the distance (E" -E') between the point E" and the point E' and the distance (E-E") between the point E " and the point E can be used as the average radius R.

When the surface of the current collector 302 has large asperities, the angle θ between the columnar particle 304 and the direction D1 of the normal to the current collector 302 can be obtained as follows. First, the mean line defined by Japanese Industrial Standards (JIS B 0601-1994) is used as the surface of the current collector. Then, the center line is obtained in the above manner from the curve along the contour of the columnar particle 304. At the center height of the columnar particle 304, a line perpendicular to the center line is drawn, and the points at which this line intersects with the curve along the contour of the columnar particle are obtained. Lastly, at each of the points of intersection, a tangent to the curve along the contour of the columnar particle is obtained. These tangents are extended in the direction to the current collector 302, and the points at which they intersect with the mean line are used as E₁ and E₂. After this, the procedure is the same as that described above.

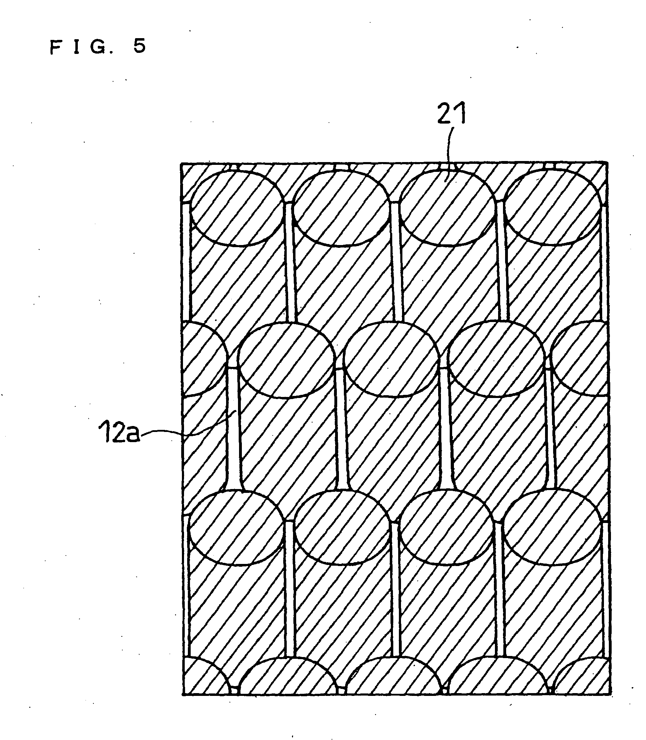

FIG. 5 is an enlarged schematic view of a top face of a negative electrode for a lithium secondary battery of the present invention. In FIG. 5, the area A of the current collector on which the active material layer is carried corresponds to the total area of the diagonally shaded region and the unshaded region. The area B of the active material layer orthogonally projected from the direction of the normal to the current collector corresponds to the area of the diagonally shaded region. In the case of actually obtaining the areas A and B, the top face of the negative electrode is observed by enlarging it with a microscope such as a SEM. In this case, the area of the whole field of view corresponds to the area A, and the area of the part of the field of view shielded by the active material corresponds to the area B. The area B can be obtained, for example, by image processing.

The current collector exposure ratio S obtained by 100 × {(A-B)/A} is desirably 60% or less, more desirably 30% or less, and most desirably 0%. As the area of the active material layer orthogonally projected from the direction of the normal to the current collector increases, the amount of the negative electrode active material facing the positive electrode active material layer increases and the exposed area of the negative electrode current collector relative to the positive electrode decreases. It should be noted that as the center-to-center distance w of the mutually adjacent columnar particles increases, the orthogonally projected area of the active material layer decreases. However, compared with the case where the columnar particles stand straight parallel to the direction of the normal to the current collector, the orthogonally projected area relatively increases, so the coulombic efficiency also rises relatively.

The center-to-center distance w of the mutually adjacent columnar particles at the center height of the columnar particles is, for example, preferably 0.1 µm or more and 200 µm or less, and more preferably 1 to 20 µm. Although it depends on the diameter d of the columnar particles, it is thought that when the center-to-center distance w is 0.1 µm or more, it is possible to obtain the effect of easing the expansion of the columnar particles and suppressing degradation of the cycle characteristic. Also, when the center-to-center distance w is 200 µm or less, it is possible to ensure relatively good energy density while limiting the exposed part of the negative electrode current collector relative to the positive electrode active material.

In terms of securing a large contact area between the electrolyte and the active material and easing the stress due to the expansion of the active material, it is desired that the active material layer has a predetermined porosity. The porosity P of the active material layer can be measured, for example, by a method using a mercury porosimeter or a method of calculating from the weight and thickness of the active material layer in a certain area and the density of the active material.
A sample prepared by cutting only a part of a current collector on which an active material layer is evenly (uniformly) carried is used as the negative electrode sample for the porosity measurement. At this time, a part of a current collector on which an active material layer is carried on both sides may be used as the sample, or a part of a current collector on which an active material layer is carried on one side may be used as the sample.

For example, the porosity P can be obtained by P(%)=100 [{ST-(W/D)} /ST] where T represents the thickness and W represents the weight of an active material layer of a sample in a certain area S, and D represents the density of the active material.
Also, in a measurement using a mercury porosimeter, the porosity P can be obtained by P(%)=100 {VH/(VT+VH)} where VH represents the volume of mercury having intruded into the pores of a sample and VT represents the true volume of an active material layer. When the current collector part of a sample has asperities on the surface, the volume of mercury having intruded into the asperities of the current collector part is included in VH in the calculation of the porosity.

When the active material contains no lithium, the porosity P of the negative electrode is desirably 10%≦P≦70%, and more desirably 30%≦P≦60% or 30%≦P≦55%. When the porosity P is 10% or more, the stress due to the expansion and contraction of the columnar particles can be sufficiently eased and a sufficient amount of electrolyte can be brought into contact with the columnar particles. If the porosity P exceeds 70%, such a negative electrode can be used without causing any problem depending on the use of the battery, but the energy density of the negative electrode becomes low.
When the active material contains lithium corresponding to irreversible capacity, the porosity P' of the negative electrode is desirably 5%≦P'≦60%, and more desirably 20%≦P'≦55%, 20%≦P'≦50%, or 30≦P'≦50%.

When the active material contains or does not contain lithium corresponding to irreversible capacity, the thickness t of the active material layer is, for example, preferably 0.1 µm≦t≦100 µm, and more preferably 1 µm≦t≦50 µm, although it depends on the diameter of the columnar particles. When the thickness t of the active material layer is 0.1 µm or more, it is possible to ensure relatively good energy density and make full use of the high capacity characteristic of the lithium secondary battery. Also, when the thickness t of the active material layer is 100 µm or less, it is possible to lower the ratio of the respective columnar particles shielded by other columnar particles and to lower the resistance in collecting current from the columnar particles, which is advantageous to high-rate charge/discharge.

The thickness t of the active material layer as used herein can be obtained as the average value of the heights of the columnar particles in the direction of the normal to the current collector. The thickness t of the active material layer can be determined by selecting, for example, at least 10 columnar particles in a cross-section of the current collector and the active material layer perpendicular to the surface of the current collector, and averaging the values of their heights in the direction of the normal to the current collector. The cross-section is observed, for example, using a SEM. Alternatively, the thickness of the active material layer can be obtained by using mean lines seen in a cross-section of the negative electrode and corresponding to the surface of the current collector and the surface of the active material layer. Specifically, the thickness of the active material layer is a distance from the mean line representing the surface of the current collector to the mean line representing the surface of the active material layer.

As used herein, "mean line" is a term used in the definition of surface roughness Ra according to JIS and refers to a straight line determined from the average value of roughness curve. Specifically, a negative electrode is impregnated with resin, and the resin-impregnated negative electrode is ground so as to obtain a cross-section perpendicular to the surface of the current collector. The ground cross-section is observed with a SEM to obtain the mean lines representing the surface of the current collector and the surface of the active material layer.

However, the thickness of the active material layer can be calculated in a simple manner by measuring the thickness of the current collector using a common thickness gauge, measuring the thickness of the current collector with the active material layer formed thereon (negative electrode), and calculating the difference therebetween. It has been experimentally clear that the calculation result thus obtained is in substantial agreement with the thickness measured precisely by using the mean lines.

It is desirable to measure the parameters, namely the center-to-center distance w of the mutually adjacent columnar particles, the thickness t of the active material layer, the porosity P, and the diameter d of the columnar particles when the negative electrode active material contains lithium corresponding to irreversible capacity or when it does not contain lithium corresponding to irreversible capacity.
In other words, it is desirable to measure these parameters using a negative electrode that contains no lithium corresponding to reversible capacity (the state of the reversible capacity being 0). In this state, the volume of the negative electrode active material layer in a completed battery is minimum. When lithium is absorbed in columnar particles due to charge, the columnar particles expands, so that the volume of the negative electrode active material layer increases.

A parameter value is determined in either of the two cases where lithium corresponding to irreversible capacity is and is not contained, and by correcting the determined value, the value for the other case can also be obtained. For example, when the porosity P of an active material layer containing no lithium is measured by using a mercury porosimeter, the value of the porosity P is corrected by using a volume difference ΔV between the volume of the active material layer containing lithium corresponding to irreversible capacity and the volume of the active material layer containing no lithium. In this case, the porosity P' for the case where lithium corresponding to irreversible capacity is contained is given by P'=P-ΔV.

The constituent material of the negative electrode current collector is not particularly limited and, for example, copper or a copper alloy is commonly used. The sheet-shaped negative electrode current collector is preferably prepared by electrolysis. The thickness of the negative electrode current collector is not particularly limited and, for example, 1 to 50 µm is common.

The negative electrode current collector desirably has asperities on the surface on which the active material layer is carried. Specifically, the surface roughness Rz of the current collector is desirably 0.1 to 100 µm, more desirably 1µm or more and 30 µm or less, and most preferably 2 µm or more and 20 µm or less.
When the surface roughness Rz is small, it may be difficult to provide spaces among the mutually adjacent columnar particles. As the surface roughness Rz increases, the average thickness of the current collector also increases, but when Rz is 100 µm or less, it is possible to make full use of the high capacity characteristic of the lithium secondary battery.

The surface of the current collector on which the active material layer is carried desirably has 100,000 to 10,000,000 protrusions per unit area (cm²). A greater number of protrusions per unit area are more advantageous for increasing the number of columnar particles carried per unit area, but the porosity P of the negative electrode tends to decrease. A smaller number of protrusions per unit area are more advantageous for decreasing the number of columnar particles carried per unit area. It is therefore desirable to control the number of protrusions per unit area of the current collector depending on the desired porosity P of the negative electrode.

The columnar particles include silicon element and include at least one selected from the group consisting of, for example, a silicon alloy, a compound containing silicon and oxygen, and a compound containing silicon and nitrogen. The active material layer may be composed only of one of them, or the active material layer may be composed of two or more of them. The compound containing silicon and nitrogen may further contain oxygen. Examples of an active material layer composed of two or more of them include an active material layer including a compound containing silicon, oxygen, and nitrogen and an active material layer including a plurality of compounds containing silicon and oxygen at different silicon/oxygen ratios.

The silicon alloy contains silicon and a metal element M, and the metal element M is desirably a metal element that is not alloyalbe with lithium. The metal element M should be a chemically stable electronic conductor, and it is desirably at least one selected from the group consisting of, for example, titanium (Ti), copper (Cu), and nickel (Ni). The silicon alloy may contain only one kind of metal element M, or the silicon alloy may contain two or more kinds thereof. The molar ratio between silicon and the metal element M in the silicon alloy is preferably in the following range.

When the metal element M is Ti, preferably 0<Ti/Si<2, and more preferably 0.1 ≦Ti/Si≦1.0.
When the metal element M is Cu, preferably 0<Cu/Si<4, and more preferably 0.1≦Cu/Si≦2.0.
When the metal element M is Ni, preferably 0<Ni/Si<2, and more preferably 0.1≦Ni/Si≦1.0.

The compound containing silicon and oxygen desirably has a compound represented by general formula (1): SiOₓ where 0<x<2. The value x representing the content of oxygen element is more preferably 0.01≦x≦1, 0.1≦x≦0.9, 0.2≦x≦0.8, or 0.2≦x≦0.7. The optimum range of the porosities P and P' depends on the range of the value x. As the value x decreases, the optimum range of the porosities P and P' tends to increase. It is believed that there is a large difference in the optimum range of the porosities P and P' between x=0 and 0 < x.

The compound containing silicon and nitrogen desirably has a composition represented by general formula (2): SiN_{y} where 0<y<4/3. The value y representing the content of nitrogen element is more preferably 0.01≦y≦1.

Since the present invention is characterized by the configuration of the negative electrode, other constituent elements of the lithium secondary battery than the negative electrode are not particularly limited. For example, for the positive electrode active material layer, lithium-containing transition metal oxides such as lithium cobaltate (LiCoO₂) lithium nickelate (LiNiO₂) and lithium manganate (LiMn₂O₄) can be used, but there is no particular limitation. Also, the positive electrode active material layer may be composed only of a positive electrode active material or may be composed of an electrode material mixture containing a positive electrode active material, a binder, and a conductive agent. Also, the positive electrode active material layer may also be composed of columnar particles in the same manner as the negative electrode active material layer. The positive electrode current collector can be Al, an Al alloy, Ni, Ti, or the like.

For the lithium-ion conductive electrolyte, various solid electrolytes and liquid non-aqueous electrolytes having lithium-ion conductivity are used. A preferable liquid non-aqueous electrolyte is prepared by dissolving a lithium salt in a non-aqueous solvent. The composition of the non-aqueous electrolyte is not particularly limited.
There is also no particular limitation with respect to the separator and the exterior case, and materials used in various forms of lithium secondary batteries can be used without any particular limitation.

Next, the method for producing the negative electrode for a non-aqueous electrolyte secondary battery of the present invention is described.
The production method of the present invention includes the steps of: (a) preparing a sheet-shaped current collector with a surface roughness Rz of 2 µm or more and 20 µm or less; and (b) projecting silicon to the current collector for deposition from a direction that forms an angle φ with the direction of the normal to the current collector, to form an active material layer containing silicon element, where 20°≦ φ≦85°.

When a thin film comprising columnar particles is formed on a plane by projecting particles on the plane, the tangent rule holds. That is, the equation: 2tan θ=tan φ holds where θ represents the angle formed between another plane perpendicular to the plane and the grow direction of the columnar particles, and φ represents the angle formed between said another plane perpendicular to the plane and the incident direction of the particles.

In terms of ensuring an appropriate porosity, as the angle φ becomes smaller, the surface roughness Rz of the current collector is desirably made greater. When the angle φ is large, Rz may be small.
For example, at least silicon is projected to the sheet-shaped current collector from a direction that forms the angle φ with the direction of the normal to the current collector. By this, a plurality of columnar particles containing silicon element can be grown in the direction inclined relative to the direction of the normal to the current collector. Examples of methods for projecting silicon to the current collector include deposition, sputtering, and chemical vapor deposition (CVD). In sputtering, a target, which is a material of the active material, is evaporated by using glow discharge etc. and deposited on the current collector. In deposition, a deposition source or the like is used instead of a target. By disposing a mask or the like between the current collector and the target or deposition source, it is possible to define the region of the current collector where columnar particles are to be grown.

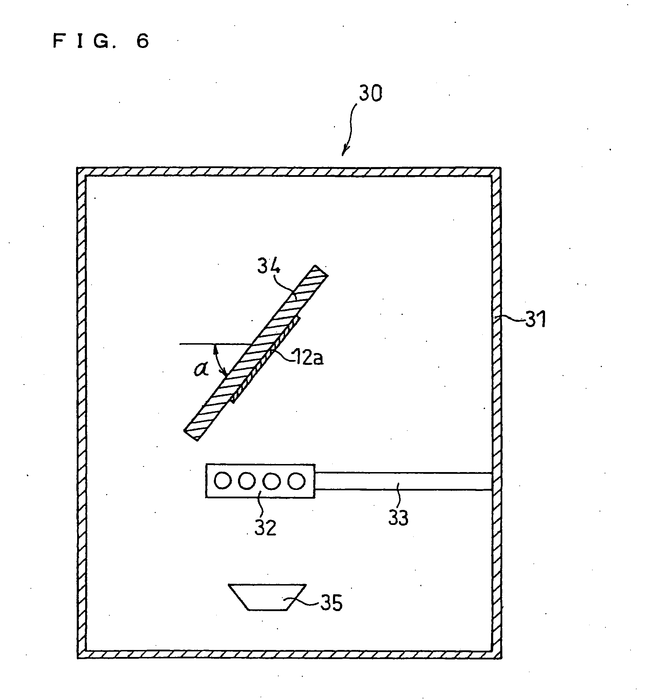

The specific conditions in these methods vary with the kind of the active material and the state of the columnar particles. For example, the conditions vary with the crystallinity of the columnar particles. In order to make the columnar particles amorphous, it is necessary to suppress an increase in the temperature of the support of the current collector (which corresponds to the fixing bench in FIG. 6). For example, it is effective to cool the support of the current collector by water cooling etc. When the active material is composed only of silicon, or includes a compound containing silicon and a very small amount of oxygen (10 mol% or less) or an alloy of silicon and a very small amount of metal (1 mol% or less), the columnar particles tend to crystallize. Thus, by increasing the ratio of elements other than silicon, it is possible to increase the likelihood that the columnar particles will become amorphous.

If necessary, in order to promote the growth of the columnar particles, the current collector may be heated or the atoms to be deposited on the current collector may be ionized or plasmatized. The preferable temperature of the current collector depends on the composition of the active material.
When the active material includes an element other than silicon, the temperature of the current collector is preferably 600°C or less. If the temperature of the current collector exceeds 600°C, the current collector may break.

When a compound containing silicon and oxygen is grown as the columnar particles, oxygen together with silicon needs to be deposited on the current collector. In this case, for example, in a reduced pressure atmosphere containing oxygen, silicon is deposited on the current collector. The pressure of the reduced pressure atmosphere is preferably, for example, 1×10⁻³ to 2×10⁻² Pa. While the partial pressure of oxygen needs to be controlled depending on the oxygen content of the active material, it is, for example, in the range of 1×10⁻³ to 5×10⁻² Pa. However, the optimum value varies with the device and the conditions.

It is preferable to form the active material layer continuously by unwinding a long-sheet current collector from a wound roll, passing it above a target or deposition source with a mask interposed therebetween, and rewinding it on a winding roll.

Next, the present invention is specifically described by way of Examples, but the following Examples are not to be construed as limiting the present invention. In Examples 1 and 3, porosities were obtained to two significant digits since there is a need to accurately measure porosities. In the other Examples and Comparative Examples, porosities were obtained to one significant digit.

### Example 1

A layered-type lithium secondary battery illustrated in FIG. 1 was produced.

### (i) Preparation of positive electrode

A positive electrode mixture paste was prepared by sufficiently mixing 10 g of lithium cobaltate (LiCoO₂) powder with a mean particle size of approximately 10 µm, serving as a positive electrode active material, 0.3 g of acetylene black, serving as a conductive agent, 0.8 g of polyvinylidene fluoride powder, serving as a binder, and a suitable amount of N-methyl-2-pyrrolidone (NMP). The resultant paste was applied onto one face of a positive electrode current collector 11a made of a 20-µm thick aluminum foil, dried and rolled, to form a positive electrode active material layer 11b. This was then cut into a predetermined shape to obtain a positive electrode 11. The positive electrode active material layer carried on one side of the aluminum foil of the positive electrode thus obtained had a thickness of 50 µm and a size of 30 mm×30 mm. A positive electrode lead 15 was connected to the backside of the current collector having no positive electrode active material layer.

### (ii) Preparation of negative electrode

A negative electrode 12 was prepared by using a deposition device 30 (available from ULVAC, Inc.) with an electron beam (EB) heating means (not shown) as illustrated in FIG. 6. The deposition device 30 was equipped with a gas pipe (not shown) for introducing oxygen gas into a chamber 31, and a nozzle 32. The nozzle 32 was connected to a pipe 33 which was introduced into the vacuum chamber 31. The pipe 33 was connected to an oxygen cylinder via a massflow controller. From the nozzle 32, an oxygen gas with a purity of 99.7% (available from Nippon Sanso Corporation) was ejected at a flow rate of 80 sccm. A fixing bench 34 for fixing a negative electrode current collector 12a was placed above the nozzle 32. A target 35, which was to be deposited in columnar form on the surface of the negative electrode current collector 12a, was placed vertically below the fixing bench 34. Silicon simple substance with a purity of 99.9999% (available from Kojundo Chemical Lab. Co., Ltd.) was used as the target 35.

To the fixing bench 34 was fixed an electrolytic copper foil with a surface roughness Rz of 10 µm and a thickness of 35 µm (available from Furukawa Circuit Foil Co., Ltd.) which had been cut to a size of 40 mm × 40 mm. The fixing bench 34 was inclined so that the angle α between itself and a horizontal plane was 60°. In a simple geometrical relation, α is equal to the angle φ between the direction of the normal to the current collector and the incident direction of particles. Thus, between the angle α between the fixing bench 34 and a horizontal plane and the grow direction θ of columnar particles, there is roughly a relation: tan α=2tan θ.

The acceleration voltage of an electron beam applied to the target 35 composed simply of silicon was set to -8 kV and the emission was set to 500 mA. Vapor composed simply of silicon passed through the oxygen atmosphere and deposited on the copper foil placed on the fixing bench 34, thereby forming a negative electrode active material layer 12b comprising a compound containing silicon and oxygen. The deposition time was set to 20 minutes. The negative electrode thus obtained is designated as a negative electrode 1A.
The amount of oxygen contained in the negative electrode active material layer 12b obtained was quantified by a combustion method, and the result showed that the composition of the compound containing silicon and oxygen was SiO_{0.5}.

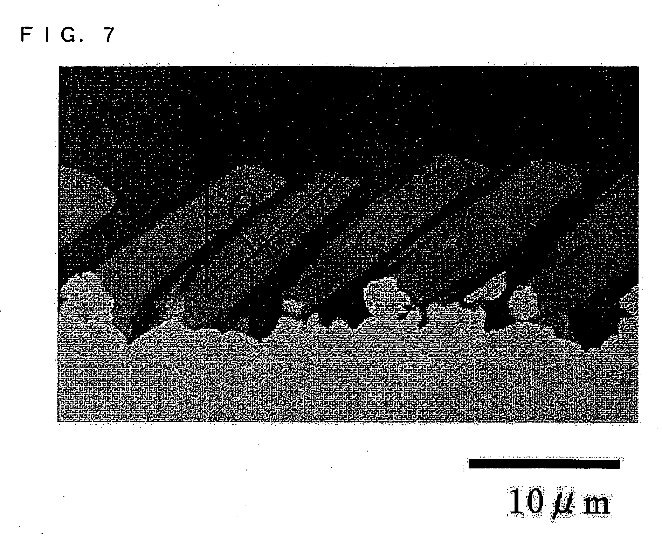

Next, in order to determine the angle θ formed between the columnar particles of the active material layer and the direction of the normal to the copper foil, a cross-section of the negative electrode 1A was observed with an electron microscope. The photo observed is shown in FIG. 7. FIG. 7 confirmed that the active material formed columnar particles and that the angle θ formed between the columnar particles and the direction of the normal was 45°.

Also, the negative electrode 1A was observed from the direction of the normal to the copper foil, and the current collector exposure ratio S was determined. As a result, the copper foil was found to have no exposed part and the current collector exposure ratio S was 0%. The measurement of the current collector exposure ratio S was made by SEM observation of the surface of the negative electrode 1A from the direction of the normal to the copper foil and EPMA (electron probe microanalysis: map analysis of elements) in combination. The observed region was a square region one side of which was 50 µm or more, and the value S was calculated in the region.
Also, the thickness t of the active material layer was 11 µm, and the center-to-center distance of the mutually adjacent columnar particles was 7 µm at the center height of the columnar particles. Also, the diameter of the columnar particles was 5 µm at the center height thereof.

Next, using a mercury porosimeter (Autopore III9410 available from Shimadzu Corporation), the porosity P of the negative electrode 1A was determined in the following manner. First, a sample of the negative electrode 1A was prepared by uniformly forming columnar particles of SiO_{0.5} on one face of a copper foil (surface roughness Rz=10 µm, thickness 35 µm) having a size of 3 cm × 3 cm in the same conditions as those described above. From the weight of the obtained sample, the weight of the copper foil was subtracted to obtain the weight of the active material layer. From the obtained weight and the density of SiO_{0.5}, the true volume (VT) of the active material layer was determined. Next, using the mercury porosimeter, mercury was forced to intrude into the pores of the sample, and the volume (VH) of the mercury having intruded was obtained. The porosity P was calculated from the true volume (VT) of the active material layer and the volume (VH) of the mercury having intruded into the pores of the sample, and it was 30%. This value was corrected by using a volume difference ΔV, which had been determined in advance, between the case where lithium corresponding to irreversible capacity was contained and the case where no lithium was contained. As a result, the porosity P' was 22%.

Also, for confirmation, another sample of the negative electrode 1A was prepared by uniformly forming columnar particles of SiO_{0.5} on one face of a copper foil (surface roughness Rz=10 µm, thickness 35 µm) having a size of 3 cm×3 cm in the same conditions as those described above. From the weight of the obtained sample, the weight of the copper foil was subtracted to obtain the weight W of the active material layer. From the value W and the density D of SiO_{0.5} not absorbing lithium corresponding to irreversible capacity, the volume (W/D) of the active material layer was determined. Also, from the thickness T (11 µm) and the area S (3 cm×3 cm=9 cm²) of the thin film, the volume (ST) of the active material layer was determined. The porosity P was calculated from these values. As a result,
P(%)=100 [{ST- (W/D)} /ST] =30%.

Next, using a resistance heating deposition device available from ULVAC, Inc., lithium metal was deposited on the negative electrode 1A. A tantalum boat in the deposition device was filled with a predetermined amount of lithium metal, and the negative electrode 1A was fixed so as to face the boat. With the value of the current passed through the boat set to 50 A, deposition was carried out for 10 minutes. By depositing lithium metal in this operation, lithium was preliminarily added to the SiO_{0.5} negative electrode active material layer in an amount corresponding to irreversible capacity that would usually occur upon the initial charge/discharge. Thereafter, the negative electrode 1A was cut to a size of 31 mm × 31 mm. A negative electrode lead 16 was connected to the backside of the current collector having no negative electrode active material layer.

The physical properties of the negative electrode 1A are summarized below.

The composition of the active material: SiO_{0.5}

The angle θ between the columnar particles and the direction of the normal to the current collector: 45°

The thickness t of the active material layer: 11 µm

The center-to-center distance of the mutually adjacent columnar particles: 7 µm

The diameter of the columnar particles: 5 µm

The surface roughness Rz: 10 µm

The current collector exposure ratio S: 0%

The porosity P: 30%

### (iii) Production of test battery

The.positive electrode active material layer 11b was opposed to the negative electrode active material layer 12b, with a separator 13 interposed therebetween, to form a thin electrode assembly. The separator 13 was a 20-µm-thick polyethylene micro-porous film available from Asahi Kasei Corporation. This electrode assembly was inserted, together with an electrolyte, into an exterior case 14 made of an aluminum laminate sheet. The electrolyte used was prepared by dissolving LiPF₆ at a concentration of 1 mol/L in a solvent mixture of ethylene carbonate (EC) and ethyl methyl carbonate (EMC) in a volume ratio of 1:1.

The positive electrode active material layer 11b, the negative electrode active material layer 12b, and the separator 13 were impregnated with the non-aqueous electrolyte. Thereafter, with the positive electrode lead 15 and the negative electrode lead 16 being drawn to the outside, and under a reduced pressure, the ends of the exterior case 14 were welded to complete a test battery. This test battery was designated as a battery 1A.

### «Comparative Example 1»

A negative electrode was produced in the following manner.
An electrolytic copper foil with a thickness of 35 µm and a surface roughness Rz of 10 µm (available from Furukawa Circuit Foil Co., Ltd.) and a dry film resist available from Hitachi Chemical Company, Ltd were laminated. Using a photomask with a pattern of 30-µm diameter dots arranged at the closest intervals of 10 µm, the dry resist film on the copper foil was exposed and developed with a NaHCO₃ aqueous solution. The copper foil was then washed with water and dried. Thereafter, deposition was carried out by using a deposition device as illustrated in FIG. 6.

The copper foil with the resist in which 30-µm diameter holes were arranged at intervals of 10 µm was fixed to the fixing bench 34, and the copper foil was disposed horizontally so that the angle α between the fixing bench and a horizontal plane was 0°. The acceleration voltage of the electron beam applied to the target 35 composed simply of silicon was set to -8 kV and the emission was set to 500 mA. Vapor composed simply of silicon passed through the oxygen atmosphere and deposited on the copper foil on the fixing bench 34, thereby forming an active material layer comprising a compound containing silicon and oxygen. The deposition time was set to 30 minutes. Thereafter, the copper film with the active material layer carried thereon was immersed in a sodium hydroxide aqueous solution to remove the resist and the thin film of the compound adhered on the resist. The negative electrode thus obtained is designated as a negative electrode 1B.
The amount of oxygen contained in the active material layer was quantified by a combustion method, and the result showed that the composition of the compound containing silicon and oxygen was SiO_{0.5}.

Next, a cross-section of the negative electrode 1B was observed with an electron microscope, and it was found that the active material formed columnar particles and that the angle θ between the columnar particles and the direction of the normal to the copper foil was 0° (i.e., the columnar particles were perpendicular to the surface of the copper foil).
When the negative electrode 1B was observed from the direction of the normal to the copper foil, the copper foil was found to have exposed parts, and the current collector exposure ratio S was 49%. Further, the porosity P of the negative electrode 1B determined using the mercury porosimeter was 49%. Also, the porosity P (100 [{ST-(W/D)} /ST]) determined from weight and volume was 49%, which was the same as the value determined by the mercury porosimeter.

The thickness t of the active material layer was 16.5 µm, the center-to-center distance of the mutually adjacent columnar particles was 40 µm at the center height of the columnar particles, and the diameter of the columnar particles at the center height thereof was 30 µm.

Next, using a resistance heating deposition device available from ULVAC, Inc., lithium metal was deposited on the negative electrode 1B in the same manner as in Example 1. By this operation, lithium was added to the SiO_{0.5} negative electrode active material in an amount corresponding to irreversible capacity upon the initial charge/discharge.

The physical properties of the negative electrode 1B are summarized below.
The composition of the active material: SiO_{0.5}
The angle θ between the columnar particles and the direction of the normal to the current collector: 0°
The thickness t of the active material layer: 16.5 µm
The center-to-center distance of the mutually adjacent columnar particles: 40 µm.
The diameter of the columnar particles: 30 µm
The current collector exposure ratio S: 49%
The porosity P: 49%
A test battery 1B was produced in the same manner as in Example 1 except for the use of the negative electrode thus obtained.

### [Evaluation method]

### (i) Injection time

In the production of the test batters, after the injection of the non-aqueous electrolyte into the exterior case, the time required for evacuating the inside of the exterior case was measured. Specifically, the time required for the pressure inside the case to reach 10 Torr so that the air (gas) remaining in the electrode assembly was completely evacuated was measured. This time is designated as injection time. The results are shown in Table 1.

### (ii) Discharge characteristics

The batteries 1A and 1B were placed in a 20°C thermostatic chamber and charged by a constant-current constant-voltage method. Specifically, the batteries were charged at a constant current of 1C rate (1C is the current value at which the whole battery capacity can be used in 1 hour) until the battery voltage reached 4.2 V. After 4.2 V was reached, the batteries were charged at the constant voltage until the current value reached 0.05 C. After the charge, they were allowed to stand for 20 minutes and then discharged at a high-rate constant current of 1 C rate until the battery voltage reached 2.5 V. After the high-rate discharge, they were again discharged at a constant current of 0.2 C until the battery voltage reached 2.5 V. After the redischarge, they were allowed to stand for 20 minutes.
This charge/discharge cycle was repeated 100 times.

In the initial cycle, the percentage of the total discharge capacity (the total of high-rate discharge and redischarge) relative to the charged capacity was obtained as coulombic efficiency. Also, in the initial cycle, the percentage of the discharge capacity upon the high-rate discharge relative to the total discharge capacity was obtained as the high-rate ratio. Further, the percentage of the whole discharge capacity at the 100^{th} cycle relative to the whole discharge capacity at the initial cycle was obtained as the capacity retention rate. The results are shown in Table 1.

**[Table 1]**

| | Injection time (second) | Coulombic efficiency | High-rate ratio | Capacity retention rate |
|---|---|---|---|---|
| Battery 1A | 22 | 98% | 90% | 93% |
| Battery 1B | 65 | 81% | 81% | 61% |

Table 1 shows that the injection time of the battery 1A is shorter than that of the battery 1B. The high penetration of the non-aqueous electrolyte of the battery 1A can be ascribed to the fact that the columnar particles of the negative electrode active material are inclined at 45° relative to the direction of the normal to the copper foil. When columnar particles are inclined and grown into elongated form, the directions of movement of air among the particles become oriented, and such orientation is believed to promote the evacuation of air from the active material layer.

Also, compared with the battery 1B, the battery 1A has a high coulombic efficiency, a high high-rate ratio, and a significantly improved capacity retention rate. The reason of the high coulombic efficiency and high high-rate ratio at the initial cycle is that the opposing areas of the negative electrode active material and the positive electrode active material increased since the columnar particles of the negative electrode active material are inclined. Another reason is probably that the lithium metal deposited on the negative electrode active material was efficiently absorbed in the negative electrode active material so that the irreversible capacity of the negative electrode active material was completely compensated for. Also, the increase in the opposing areas of the negative electrode active material and the positive electrode active material allows the charge/discharge reaction to proceed evenly and suppresses lithium deposition reaction and local overcharge/over discharge of the positive electrode. This is believed to be advantageous also in terms of improving the capacity retention rate.

### Example 2

Negative electrodes 2A to 2F, described below, were produced in the same manner as in Example 1, except that in the formation of the negative electrode active material, the angle θ between the columnar particles and the direction of the normal to the current collector was varied. Specifically, the surface roughness Rz of the electrolytic copper foil and the angle α between the fixing bench 34 of the deposition device of FIG. 6 and a horizontal plane were changed, and the deposition conditions were adjusted. Also, test batteries 2A to 2F were produced in the same manner as in Example 1 except for the use of the negative electrodes 2A to 2F.

### (i) Negative electrode 2A (Comparative Example)

A negative electrode was produced in the same manner as in Example 1, except that an electrolytic copper foil with a surface roughness Rz of 30 µm was used as the current collector, that the angle α between the fixing bench 34 and a horizontal plane was set to 10°, and that the deposition time was set to 14 minutes.
The physical properties of the negative electrode 2A are summarized below.
The composition of the active material: SiO_{0.5}
The angle θ between the columnar particles and the direction of the normal to the current collector: 5°
The thickness t of the active material layer: 11 µm
The center-to-center distance of the mutually adjacent columnar particles: 7 µm
The diameter of the columnar particles: 5 µm
The surface roughness Rz: 30 µm
The current collector exposure ratio S: 55%
The porosity P: 30%

### (ii) Negative electrode 2B

A negative electrode was produced in the same manner as in Example 1, except that an electrolytic copper foil with a surface roughness Rz of 20 µm was used as the current collector, that the angle α between the fixing bench 34 and a horizontal plane was set to 20°, and that the deposition time was set to 14 minutes.
The physical properties of the negative electrode 2B are summarized below.
The composition of the active material: SiO_{0.5}
The angle θ between the columnar particles and the direction of the normal to the current collector: 10°
The thickness t of the active material layer: 11 µm
The center-to-center distance of the mutually adjacent columnar particles: 7 µm
The diameter of the columnar particles: 5 µm
The surface roughness Rz: 20 µm
The current collector exposure ratio S: 10%
The porosity P: 30%

### (iii) Negative electrode 2C

A negative electrode was produced in the same manner as in Example 1, except that an electrolytic copper foil with a surface roughness Rz of 15 µm was used as the current collector, that the angle α between the fixing bench 34 and a horizontal plane was set to 50°, and that the deposition time was set to 16 minutes.
The physical properties of the negative electrode 2C are summarized below.
The composition of active material: SiO_{0.5}
The angle θ between the columnar particles and the direction of the normal to the current collector: 30°
The thickness t of the active material layer: 11 µm
The center-to-center distance of the mutually adjacent columnar particles: 7 µm
The diameter of the columnar particles: 5 µm
The surface roughness Rz: 15 µm
The current collector exposure ratio S: 0%
The porosity P: 30%

### (iv) Negative electrode 2D

A negative electrode was produced in the same manner as in Example 1, except that an electrolytic copper foil with a surface roughness Rz of 5 µm was used as the current collector, that the angle α between the fixing bench 34 and a horizontal plane was set to 74°, and that the deposition time was set to 28 minutes.
The physical properties of the negative electrode 2D are summarized below.
The composition of the active material: SiO₀.₅
The angle θ between the columnar particles and the direction of the normal to the current collector: 60°
The thickness t of the active material layer: 11 µm
The center-to-center distance of the mutually adjacent columnar particles: 7 µm
The diameter of the columnar particles: 5 µm
The surface roughness Rz: 5 µm
The current collector exposure ratio S: 0%
The porosity P: 30%

### (v) Negative electrode 2E

A negative electrode was produced in the same manner as in Example 1, except that an electrolytic copper foil with a surface roughness Rz of 2 µm was used as the current collector, that the angle α between the fixing bench 34 and a horizontal plane was set to 85°, and that the deposition time was set to 81 minutes.

The physical properties of the negative electrode 2E are summarized below.
The composition of the active material: SiO_{0.5}
The angle θ between the columnar particles and the direction of the normal to the current collector: 80°
The thickness t of the active material layer: 11 µm
The center-to-center distance of the mutually adjacent columnar particles: 7 µm
The diameter of the columnar particles: 5 µm
The surface roughness Rz: 2 µm
The current collector exposure ratio S: 0%
The porosity P: 30%

The coulombic efficiency, high-rate ratio, and capacity retention rate of the batteries 2A to 2E were measured in the same manner as described above. Table 2 shows the results.

**[Table 2]**

| | Coulombic efficiency | High-rate ratio | Capacity retention rate |
|---|---|---|---|
| Battery 2A | 90% | 81% | 70% |
| Battery 2B | 99% | 87% | 90% |
| Battery 2C | 98% | 88% | 94% |
| Battery 2D | 98% | 90% | 91% |
| Battery 2E | 97% | 90% | 89% |

The battery 2A was relatively inferior to the other batteries in all of the coulombic efficiency, high-rate ratio, and capacity retention rate. The reason of the relatively low coulombic efficiency of the battery 2A is that the current collector exposure ratio S of the negative electrode is high. It is believed that the lithium metal to be deposited on the negative electrode deposited on the copper foil so that the irreversible capacity of the negative electrode active material was not completely compensated for. Also, the reason of the relatively low high-rate ratio is probably that the opposing areas of the negative electrode active material layer and the positive electrode active material layer decreased. Further, the reason of the relatively low capacity retention rate is probably the occurrence of lithium deposition reaction and local overcharge/overdischarge of the positive electrode.

On the other hand, the batteries 2B to 2E had coulombic efficiencies of 96% or more, high high-rate ratios, and cycle retention rates of 85% or more, producing good results in all the characteristics. The above results clearly indicate that the appropriate range of the angle θ between the columnar particles and the direction of the normal to the current collector is 10°≦ θ ≦80°.

### Example 3

Negative electrodes 3A to 3E, described below, were produced in the same manner as in Example 1, except that in the formation of the negative electrode active material, the surface roughness Rz of the copper foil was varied. Also, test batteries 3A to 3E were produced in the same manner as in Example 1, except that the negative electrodes 3A to 3E were used and that the thickness of the positive electrode active material layer was varied.

### (i) Negative electrode 3A (Comparative Example)

The negative electrode 3A was produced in the same manner as in Example 1, except that a rolled copper foil with a surface roughness Rz of 0.3 µm was used as the current collector. A test battery 3A was produced in the same manner as in Example 1, except that the negative electrode 3A was used and that the thickness of the positive electrode active material layer was changed to 71 µm.
The physical properties of the negative electrode 3A are summarized below.
The composition of the active material: SiO_{0.5}
The angle θ between the columnar particles and the direction of the normal to the current collector: 45°
The thickness t of the active material layer: 11 µm
The center-to-center distance of the mutually adjacent columnar particles: 5.1 µm
The diameter of the columnar particles: 5 µm
The surface roughness Rz: 0.3 µm
The current collector exposure ratio S: 0%
The porosity P: 1%

### (ii) Negative electrode 3B

The negative electrode 3B was produced in the same manner as in Example 1, except that an electrolytic copper foil with a surface roughness Rz of 2 µm was used as the current collector. A test battery 3B was produced in the same manner as in Example 1, except that the negative electrode 3B was used and that the thickness of the positive electrode active material layer was changed to 65 µm.
The physical properties of the negative electrode 3B are summarized below.
The composition of the active material: SiO_{0.5}
The angle θ between the columnar particles and the direction of the normal to the current collector: 45°
The thickness t of the active material layer: 11 µm
The center-to-center distance of the mutually adjacent columnar particles: 5.3 µm
The diameter of the columnar particles: 5 µm
The surface roughness Rz: 2 µm
The current collector exposure ratio S: 0%
The porosity P: 10%

### (iii) Negative electrode 3C

The negative electrode 3C was produced in the same manner as in Example 1, except that an electrolytic copper foil with a surface roughness Rz of 15 µm was used as the current collector. A test battery 3C was produced in the same manner as in Example 1, except that the negative electrode 3C was used and that the thickness of the positive electrode active material layer was changed to 36 µm.
The physical properties of the negative electrode 3C are summarized below.
The composition of the active material: SiO_{0.5}
The angle θ between the columnar particles and the direction of the normal to the current collector: 45°
The thickness t of the active material layer: 11 µm
The center-to-center distance of the mutually adjacent columnar particles: 8 µm
The diameter of the columnar particles: 5 µm
The surface roughness Rz: 15 µm
The current collector exposure ratio S: 0%
The porosity P: 50%

### (iv) Negative electrode 3D

The negative electrode 3D was produced in the same manner as in Example 1, except that an electrolytic copper foil with a surface roughness Rz of 20 µm was used as the current collector. A test battery 3D was produced in the same manner as in Example 1, except that the negative electrode 3D was used and that the thickness of the positive electrode active material layer was changed to 22 µm.
The physical properties of the negative electrode 3D are summarized below.
The composition of the active material: SiO_{0.5}
The angle θ between the columnar particles and the direction of the normal to the current collector: 45°
The thickness t of the active material layer: 11 µm
The center-to-center distance of the mutually adjacent columnar particles: 8 µm
The diameter of the columnar particles: 5 µm
The surface roughness Rz: 20 µm
The current collector exposure ratio S: 0%
The porosity P: 70%

### (v) Negative electrode 3E < comparative example >

The negative electrode 3E was produced in the same manner as in Example 1, except that an electrolytic copper foil with a surface roughness Rz of 30 µm was used as the current collector. A test battery 3E was produced in the same manner as in Example 1, except that the negative electrode 3E was used and that the thickness of the positive electrode active material layer was changed to 20 µm.
The physical properties of the negative electrode 3E are summarized below.
The composition of the active material: SiO_{0.5}
The angle θ between the columnar particles and the direction of the normal to the current collector: 45°
The thickness t of the active material layer: 11 µm
The center-to-center distance of the mutually adjacent columnar particles: 9 µm
The diameter of the columnar particles: 5 µm
The surface roughness Rz: 30 µm
The current collector exposure ratio S: 0%
The porosity P: 72%

The coulombic efficiency, high-rate ratio, and capacity retention rate of the batteries 3A to 3E were measured in the same manner as described above. The results are shown in Table 3.

**[Table 3]**

| | Coulombic efficiency | High-rate ratio | Capacity retention rate |
|---|---|---|---|
| Battery 3A | 98% | 85% | 75% |
| Battery 3B | 98% | 87% | 90% |
| Battery 3C | 98% | 90% | 92% |
| Battery 3D | 97% | 90% | 92% |
| Battery 3E | 87% | 90% | 70% |

The battery 3A was relatively inferior in high-rate ratio. This is probably because due to the small center-to-center distance of the columnar particles, the contact between the non-aqueous electrolyte and the active material was suppressed. It is also believed that the expansion of the active material caused cracking or separation of the columnar particles, thereby resulting in poor current collection.

On the other hand, the batteries 3B to 3D produced good results in all the characteristics. The battery 3E was relatively inferior in coulombic efficiency and capacity retention rate. This is probably because due to the large center-to-center distance of the columnar particles and the high porosity of the negative electrode, when lithium metal was deposited to compensate for irreversible capacity, the lithium metal deposited on the copper foil. It is believed that the lithium metal deposited on the copper foil does not contribute to compensation since it deteriorates due to oxidation or the like before a battery is assembled. Also, the reason of the low capacity retention rate is probably the occurrence of lithium deposition reaction and local overcharge/overdischarge of the positive electrode.
It is noted that the high-rate characteristic and the cycle characteristic tend to improve as the porosity becomes higher. However, as the porosity becomes higher, the amount of the negative electrode active material decreases. Hence, in terms of capacity balance between the positive electrode and the negative electrode, it is necessary to reduce the thickness of the positive electrode, which results in a decrease in battery capacity. In battery design where power is more important than battery capacity, the porosity may be high, for example, more than 70%. However, in consideration of the balance between the high-rate characteristic, the cycle characteristic, and the battery capacity, it is particularly desirable that the porosity be 30% or more and 60% or less, and it is more desirable that it be 50% or less.

### Example 4

### (i) Negative electrode 4A

A negative electrode 4A was produced in the same manner as in Example 1, except that the deposition time was set to 11 seconds.
The physical properties of the negative electrode 4A are summarized below.
The composition of the active material: SiO_{0.5}
The angle θ between the columnar particles and the direction of the normal to the current collector: 45°
The thickness t of the active material layer: 0.1 µm
The center-to-center distance of the mutually adjacent columnar particles: 7 µm
The diameter of the columnar particles: 5 µm
The surface roughness Rz: 10 µm
The current collector exposure ratio S: 0%
The porosity P: 30%

A positive electrode was produced by using an RF magnetron sputtering device in the following manner.
A 20- µm thick stainless steel foil (SUS304) was used as the positive electrode current collector. The target used was 4 inches in diameter and 5 mm in thickness and made of LiCoO₂. Argon gas was introduced into a vacuum chamber at a flow rate of 100 sccm, so that the pressure inside the chamber was 20 mTorr. With the power of the high frequency power source set to 100 W, sputtering was performed for 10 minutes. Thereafter, the stainless steel foil with a LiCoO₂ thin film formed thereon was collected and placed in a baking furnace where it was baked at 500°C in air for 5 hours to form a 0.12- µm thick positive electrode active material layer. The positive electrode active material layer was analyzed by inductively coupled high frequency plasma spectroscopy (ICP spectroscopy) and oxygen analysis, and the result showed that the molar ratio of Li to Co to oxygen contained in the positive electrode active material was 1:1:2. This positive electrode is designated as a positive electrode 4A.
A test battery 4A was produced in the same manner as in Example 1, except that the negative electrode 4A and the positive electrode 4A were used.

### (ii) Negative electrode 4B

A negative electrode 4B was produced in the same manner as in Example 1, except that the deposition time was set to 145 minutes.
The physical properties of the negative electrode 4B are summarized below.
The composition of the active material: SiO_{0.5}
The angle θ between the columnar particles and the direction of the normal to the current collector: 45°
The thickness t of the active material layer: 80 µm
The center-to-center distance of the mutually adjacent columnar particles: 7 µm
The diameter of the columnar particles: 5 µm
The surface roughness Rz: 10 µm
The current collector exposure ratio S: 0%
The porosity P: 30%

A positive electrode 4B was produced in the same manner as the positive electrode of Example 1, except that the thickness of the positive electrode active material was changed to 98 µm.
A test battery 4B was produced in the same manner as in Example 1, except that the negative electrode 4B and the positive electrode 4B were used.

### (iii) Negative electrode 4C

A negative electrode 4C was produced in the same manner as in Example 1, except that the deposition time was set to 182 minutes.
The physical properties of the negative electrode 4C are summarized below.
The composition of the active material: SiO_{0.5}
The angle θ between the columnar particles and the direction of the normal to the current collector: 45°
The thickness t of the active material layer: 100 µm
The center-to-center distance of the mutually adjacent columnar particles: 7 µm
The diameter of the columnar particles: 5 µm
The surface roughness Rz: 10 µm
The current collector exposure ratio S: 0%
The porosity P: 30%

A positive electrode 4C was produced in the same manner as the positive electrode of Example 1, except that the thickness of the positive electrode active material was changed to 123 µm.
A test battery 4C was produced in the same manner as in Example 1, except that the negative electrode 4C and the positive electrode 4C were used.

### (iv) Negative electrode 4D

A negative electrode 4D was produced in the same manner as in Example 1, except that the deposition time was set to 218 minutes.
The physical properties of the negative electrode 4D are summarized below.
The composition of the active material: SiO_{0.5}
The angle θ between the columnar particles and the direction of the normal to the current collector: 45°
The thickness t of the active material layer: 120 µm
The center-to-center distance of the mutually adjacent columnar particles: 7 µm
The diameter of the columnar particles: 5 µm
The surface roughness Rz: 10 µm
The current collector exposure ratio S: 0%
The porosity P: 30%

A positive electrode 4D was produced in the same manner as the positive electrode of Example 1, except that the thickness of the positive electrode active material was changed to 147 µm.
A test battery 4D was produced in the same manner as in Example 1, except that the negative electrode 4D and the positive electrode 4D were used.

The coulombic efficiency, high-rate ratio, and capacity retention rate of the batteries 4A to 4D were measured in the same manner as described above. The results are shown in Table 4.

**[Table 4]**

| | Coulombic efficiency | High-rate ratio | Capacity retention rate |
|---|---|---|---|
| Battery 4A | 98% | 95% | 95% |
| Battery 4B | 98% | 88% | 81% |
| Battery 4C | 98% | 86% | 74% |
| Battery 4D | 98% | 85% | 69% |

The above results indicate that as the thickness of the active material layer increases, the capacity retention rate tends to lower. Also, the battery 4D was relatively inferior in high-rate ratio. This is probably because the columnar particles of the negative electrode active material layer became long and thus the contact area between the copper foil and the active material became relatively small, thereby resulting in an increase in resistance. It is believed that the increase in resistance makes the charge/discharge reaction uneven, thereby resulting in degradation of cycle characteristic.

The result of the battery 4A indicates that even when the thickness of the active material layer is 0.1 µm, there is no problem with respect to coulombic efficiency, high-rate ratio, and capacity retention rate. However, the capacity per unit area decreases, which is thought to limit the range of practical uses. The above results demonstrate that the preferable thickness range of the active material layer is 0.1 µm to 100 µm.

### Example 5

Negative electrodes 5A to 5F, described below, were produced in the same manner as in Example 1, except that in the formation of the negative electrode active material, the ratio of silicon to oxygen was varied by adjusting the deposition conditions. Also, test batteries 5A to 5F were produced in the same manner as in Example 1 except for the use of the negative electrodes 5A to 5F.

### (i) Negative electrode 5A

The negative electrode 5A was produced in the same manner as in Example 1, except that in the formation of the negative electrode active material, the flow rate of oxygen was set to 0 and that the deposition time was set to 7 minutes. The amount of oxygen contained in the active material layer obtained was quantified by a combustion method, and the result showed that the oxygen content was 1 % or less.
The physical properties of the negative electrode 5A are summarized below.
The composition of the active material: Si (simple substance)
The angle θ between the columnar particles and the direction of the normal to the current collector: 45°
The thickness t of the active material layer: 6 µm
The center-to-center distance of the mutually adjacent columnar particles: 7 µm
The diameter of the columnar particles: 5 µm
The surface roughness Rz: 10 µm
The current collector exposure ratio S: 0%
The porosity P: 30%

### (ii) Negative electrode 5B

The negative electrode 5B was produced in the same manner as in Example 1, except that in the formation of the negative electrode active material, the flow rate of oxygen was set to 16 sccm and that the deposition time was set to 8 minutes. The amount of oxygen contained in the active material layer obtained was quantified by a combustion method, and the result showed that the composition of the compound containing silicon and oxygen was SiO_{0.1}.
The physical properties of the negative electrode 5B are summarized below.
The composition of the active material: SiO_{0.1}
The angle θ between the columnar particles and the direction of the normal to the current collector: 45°
The thickness t of the active material layer: 7 µm
The center-to-center distance of the mutually adjacent columnar particles: 7 µm
The diameter of the columnar particles: 5 µm
The surface roughness Rz: 10 µm
The current collector exposure ratio S: 0%
The porosity P: 30%

### (iii) Negative electrode 5C

The negative electrode 5C was produced in the same manner as in Example 1, except that in the formation of the negative electrode active material, the flow rate of oxygen was set to 32 sccm and that the deposition time was set to 9 minutes. The amount of oxygen contained in the active material layer obtained was quantified by a combustion method, and the result showed that the composition of the compound containing silicon and oxygen was SiO_{0.2}.
The physical properties of the negative electrode 5C are summarized below.
The composition of the active material: SiO_{0.2}
The angle θ between the columnar particles and the direction of the normal to the current collector: 45°
The thickness t of the active material layer: 8 µm
The center-to-center distance of the mutually adjacent columnar particles: 7 µm
The diameter of the columnar particles: 5 µm
The surface roughness Rz: 10 µm
The current collector exposure ratio S: 0%
The porosity P: 30%

### (iv) Negative electrode 5D

The negative electrode 5D was produced in the same manner as in Example 1, except that in the formation of the negative electrode active material, the flow rate of oxygen was set to 48 sccm and that the deposition time was set to 10 minutes. The amount of oxygen contained in the active material layer obtained was quantified by a combustion method, and the result showed that the composition of the compound containing silicon and oxygen was SiO_{0.3}.
The physical properties of the negative electrode 5D are summarized below.
The composition of the active material: SiO_{0.3}
The angle θ between the columnar particles and the direction of the normal to the current collector: 45°
The thickness t of the active material layer: 9 µm
The center-to-center distance of the mutually adjacent columnar particles: 7 µm
The diameter of the columnar particles: 5 µm
The surface roughness Rz: 10 µm
The current collector exposure ratio S: 0%
The porosity P: 30%

### (v) Negative electrode 5E

The negative electrode 5E was produced in the same manner as in Example 1, except that in the formation of the negative electrode active material, the flow rate of oxygen was set to 64 sccm and that the deposition time was set to 11 minutes. The amount of oxygen contained in the active material layer obtained was quantified by a combustion method, and the result showed that the composition of the compound containing silicon and oxygen was SiO_{0.4}.
The physical properties of the negative electrode 5E are summarized below.
The composition of the active material: SiO_{0.4}
The angle θ between the columnar particles and the direction of the normal to the current collector: 45°
The thickness t of the active material layer: 10 µm
The center-to-center distance of the mutually adjacent columnar particles : 7 µm
The diameter of the columnar particles : 5 µm
The surface roughness Rz: 10 µm
The current collector exposure ratio S: 0%
The porosity P: 30%

### (vi) Negative electrode 5F

The negative electrode 5F was produced in the same manner as in Example 1, except that in the formation of the negative electrode active material, the flow rate of oxygen was set to 160 sccm and that the deposition time was set to 37 minutes. The amount of oxygen contained in the active material layer obtained was quantified by a combustion method, and the result showed that the composition of the compound containing silicon and oxygen was SiO_{1.0}.
The physical properties of the negative electrode 5F are summarized below.
The composition of the active material: SiO_{1.0}
The angle θ between the columnar particles and the direction of the normal to the current collector: 45°
The thickness t of the active material layer: 17 µm
The center-to-center distance of the mutually adjacent columnar particles: 7 µm
The diameter of the columnar particles: 5 µm
The surface roughness Rz: 10 µm
The current collector exposure ratio S: 0%
The porosity P: 30%

### (vii) Negative electrode 5G (Comparative Example)

The negative electrode 5G was produced in the same manner as in Example 1, except that in the formation of the negative electrode active material, a lump of silicon dioxide available from Kojundo Chemical Lab. Co., Ltd. was used as the target 35, that the flow rate of oxygen was set to 20 sccm, and that the emission was set to 500 mA. A test battery 5G was produced in the same manner as in Example 1 except for the use of the negative electrode 5G. The amount of oxygen contained in the active material layer obtained was quantified by a combustion method, and the result showed that the composition of the compound containing silicon and oxygen was SiO₂.
The physical properties of the negative electrode 5G are summarized below.
The composition of the active material: SiO₂
The angle θ between the columnar particles and the direction of the normal to the current collector: 45°
The thickness t of the active material layer: 11 µm
The center-to-center distance of the mutually adjacent columnar particles: 7 µm
The diameter of the columnar particles: 5 µm
The surface roughness Rz: 10 µm
The current collector exposure ratio S: 0%
The porosity P: 30%

### (viii) Negative electrode 5H

The negative electrode 5H was produced in the same manner as in Example 1, except that in the formation of the negative electrode active material, the flow rate of oxygen was set to 96 sccm and that the deposition time was set to 24 minutes. The amount of oxygen contained in the active material layer obtained was quantified by a combustion method, and the result showed that the composition of the compound containing silicon and oxygen was SiO_{0.6}.
The physical properties of the negative electrode 5H are summarized below.
The composition of the active material: SiO_{0.6}
The angle θ between the columnar particles and the direction of the normal to the current collector: 45°
The thickness t of the active material layer: 13 µm
The center-to-center distance of the mutually adjacent columnar particles: 7 µm
The diameter of the columnar particles: 5 µm
The surface roughness Rz: 10 µm
The current collector exposure ratio S: 0%
The porosity P: 30%

### (ix) Negative electrode 5I

The negative electrode 5I was produced in the same manner as in Example 1, except that in the formation of the negative electrode active material, the flow rate of oxygen was set to 112 sccm and that the deposition time was set to 25 minutes. The amount of oxygen contained in the active material layer obtained was quantified by a combustion method, and the result showed that the composition of the compound containing silicon and oxygen was SiO_{0.7}.
The physical properties of the negative electrode 5I are summarized below.
The composition of the active material: SiO_{0.7}
The angle θ between the columnar particles and the direction of the normal to the current collector: 45°
The thickness t of the active material layer: 14 µm
The center-to-center distance of the mutually adjacent columnar particles: 7 µm
The diameter of the columnar particles: 5 µm

### (x) Negative electrode 5J

The negative electrode 5J was produced in the same manner as in Example 1, except that in the formation of the negative electrode active material, the flow rate of oxygen was set to 128 sccm and that the deposition time was set to 29 minutes. The amount of oxygen contained in the active material layer obtained was quantified by a combustion method, and the result showed that the composition of the compound containing silicon and oxygen was SiO_{0.8}.
The physical properties of the negative electrode 5J are summarized below.
The composition of the active material: SiO_{0.8}
The angle θ between the columnar particles and the direction of the normal to the current collector: 45°
The thickness t of the active material layer: 16 µm
The center-to-center distance of the mutually adjacent columnar particles : 7 µm
The diameter of the columnar particles: 5 µm

### (xi) Negative electrode 5K

The negative electrode 5K was produced in the same manner as in Example 1, except that in the formation of the negative electrode active material, the flow rate of oxygen was set to 144 sccm and that the deposition time was set to 33 minutes. The amount of oxygen contained in the active material layer obtained was quantified by a combustion method, and the result showed that the composition of the compound containing silicon and oxygen was SiO_{0.9}.
The physical properties of the negative electrode 5K are summarized below.
The composition of the active material: SiO_{0.9}
The angle θ between the columnar particles and the direction of the normal to the current collector: 45°
The thickness t of the active material layer: 18 µm
The center-to-center distance of the mutually adjacent columnar particles: 7 µm
The diameter of the columnar particles: 5 µm

The coulombic efficiency, high-rate ratio, and capacity retention rate of the batteries 5A to 5K were measured in the same manner as described above. The results are shown in Table 5.

**[Table 5]**

| | Coulombic efficiency | High-rate ratio | Capacity retention rate |
|---|---|---|---|
| Battery 5A | 98% | 89% | 72% |
| Battery 5B | 98% | 90% | 77% |
| Battery 5C | 98% | 90% | 80% |
| Battery 5D | 98% | 90% | 86% |
| Battery 5E | 98% | 90% | 90% |
| Battery 5F | 98% | 90% | 93% |
| Battery 5G | - | - | - |
| Battery 5H | 98% | 90% | 91% |
| Battery 5I | 98% | 91% | 92% |
| Battery 5J | 98% | 90% | 92% |
| Battery 5K | 98% | 90% | 93% |

The battery 5G provided no capacity in the charge/discharge tests and could not be tested in all the tests. The results of the batteries 5A to 5F made it clear that as the ratio of oxygen contained in the negative electrode active material is higher, the capacity retention rate improves. This is probably because when the ratio of oxygen contained in the negative electrode active material is low, the expansion rate of the active material upon charge increases. On the other hand, it is believed that when the ratio of oxygen contained in the negative electrode active material is high, the expansion rate of the active material upon charge is low, so that even upon expansion, sufficient spaces are ensured among the columnar particles, thereby resulting in reduced stress and good current collection.
It is thought that when the ratio of oxygen contained in the negative electrode active material is low, by growing the active material under conditions which provide a high porosity P, a good negative electrode which is not subject to stress due to expansion of the active material can be obtained.

### Example 6

Negative electrodes 6A to 6B, described below, were produced by using a silicon alloy as the negative electrode active material, and test batteries 6A to 6B were produced in the same manner as in Example 1 except for the use of the negative electrodes 6A to 6B. The silicon alloy contained silicon and a metal element M, and Ti or Cu not alloyable with lithium was used as the metal element M.

### (i) Negative electrode 6A

The negative electrode 6A was produced in the same manner as in Example 1, except that in the formation of the negative electrode active material, a mixture of Si powder and TiSi₂ powder (Si:TiSi₂=3:1 (molar ratio)) available from Kojundo Chemical Lab. Co., Ltd was used as the target 35, and that the flow rate of oxygen was set to 0 sccm. The active material layer obtained was quantified by fluorescent X-ray spectrometry, and the result showed that the composition of the alloy was SiTi_{0.2}.
The physical properties of the negative electrode 6A are summarized below.
The composition of the active material: SiTi_{0.2}
The angle θ between the columnar particles and the direction of the normal to the current collector: 45°
The thickness t of the active material layer: 9 µm
The center-to-center distance of the mutually adjacent columnar particles: 7 µm
The diameter of the columnar particles: 5 µm
The surface roughness Rz: 10 µm
The current collector exposure ratio S: 0%
The porosity P: 30%

### (ii) Negative electrode 6B

The negative electrode 6B was produced in the same manner as in Example 1, except that in the formation of the negative electrode active material, a mixture of Si powder and Cu powder (Si:Cu=5:1 (molar ratio)) available from Kojundo Chemical Lab. Co., Ltd was used as the target 35, and that the flow rate of oxygen was set to 0 sccm. The active material layer obtained was quantified by fluorescent X-ray spectrometry, and the result showed that the composition of the alloy was SiCu_{0.2}.
The physical properties of the negative electrode 6B are summarized below.
The composition of the active material: SiCu_{0.2}
The angle θ between the columnar particles and the direction of the normal to the current collector: 45°
The thickness t of the active material layer: 9 µm
The center-to-center distance of the mutually adjacent columnar particles: 7 µm
The diameter of the columnar particles: 5 µm
The surface roughness Rz: 10 µm
The current collector exposure ratio S: 0%
The porosity P: 30%

The coulombic efficiency, high-rate ratio, and capacity retention rate of the batteries 6A to 6B were measured in the same manner as described above. The results are shown in Table 6.

**[Table 6]**

| | Coulombic efficiency | High-rate ratio | Capacity retention rate |
|---|---|---|---|
| Battery 6A | 98% | 89% | 72% |
| Battery 6B | 98% | 86% | 71% |
| Battery 7A | 98% | 90% | 86% |
| Battery 7B | 98% | 89% | 89% |

### Example 7

Negative electrodes 7A to 7B, described below, were prepared by using a compound containing silicon and nitrogen as the negative electrode active material, and test batteries 7A to 7B were produced in the same manner as in Example 1 except for the use of the negative electrodes 7A to 7B.

### (i) Negative electrode 7A

The negative electrode 7A was produced in the same manner as in Example 1, except that in the formation of the negative electrode active material, monocrystalline silicon available from Kojundo Chemical Lab. Co., Ltd. was used as the target 35, that nitrogen instead of oxygen was introduced into the chamber, that the acceleration voltage of the electron beam applied to the target 35 was set to -8 kV, that the emission was set to 300 mA, and the deposition time was set to 40 minutes.

The nitrogen gas used was a nitrogen gas with a purity of 99.7% (available from Nippon Sanso Corporation), and the flow rate of nitrogen was set to 20 sccm. Also, an EB irradiation device was installed near the nozzle 32. With the acceleration voltage set to -4 kV and the emission set to 20 mA, the nitrogen gas was plasmatized.
The active material layer obtained was quantified by fluorescent X-ray spectrometry, and the result showed that the composition of the compound containing silicon and nitrogen was SiN_{0.2}.
The physical properties of the negative electrode 7A are summarized below.
The composition of the active material: SiN_{0.2}
The angle θ between the columnar particles and the direction of the normal to the current collector: 45°
The thickness t of the active material layer: 9 µm
The center-to-center distance of the mutually adjacent columnar particles: 7 µm
The diameter of the columnar particles: 5 µm
The surface roughness Rz: 10 µm
The current collector exposure ratio S: 0%
The porosity P: 30%

### (ii) Negative electrode 7B

The negative electrode 7B was produced in the same manner as in Example 1, except that in the formation of the negative electrode active material, monocrystalline silicon available from Kojundo Chemical Lab. Co., Ltd. was used as the target 35, that oxygen and nitrogen were introduced into the chamber, that the acceleration voltage of the electron beam applied to the target 35 was set to -8 kV, that the emission was set to 300 mA, and the deposition time was set to 40 minutes.

The oxygen gas used was an oxygen gas with a purity of 99.7% (available from Nippon Sanso Corporation), and the nitrogen gas used was a nitrogen gas with a purity of 99.7% (available from Nippon Sanso Corporation). The flow rate of oxygen was set to 10 sccm, and the flow rate of nitrogen was set to 10 sccm as well. Also, an EB irradiation device was installed near the nozzle 32. With the acceleration voltage set to -4 kV and the emission set to 20 mA, the nitrogen gas was plasmatized.
The active material layer obtained was quantified by fluorescent X-ray spectrometry, and the result showed that the composition of the compound containing silicon and nitrogen was SiO_{0.1}N_{0.1}.
The physical properties of the negative electrode 7B are summarized below.
The composition of the active material: SiO_{0.1}N_{0.1}
The angle θ between the columnar particles and the direction of the normal to the current collector: 45°
The thickness t of the active material layer: 9 µm
The center-to-center distance of the mutually adjacent columnar particles: 7 µm
The diameter of the columnar particles: 5 µm
The surface roughness Rz: 10 µm
The current collector exposure ratio S: 0%
The porosity P: 30%

The coulombic efficiency, high-rate ratio, and capacity retention rate of the batteries 7A to 7B were measured in the same manner as described above. The results are shown in Table 6.

The result of the battery 6A showed that the use of an alloy containing silicon and titanium as the active material can provide the effects of the invention. Also, the result of the battery 6B indicated that the use of an alloy containing silicon and copper as the active material can provide the effects of the present invention.

The result of the battery 7A demonstrated that the use of a compound containing silicon and nitrogen as the active material can provide the effects of the invention. Further, the result of the battery 7B revealed that the use of a compound containing silicon, nitrogen, and oxygen can provide the effects of the invention.

### Industrial Applicability

The present invention is applicable to various forms of lithium secondary batteries and particularly useful in lithium secondary batteries that are required to provide a high capacity and a good cycle characteristic. The shape of the lithium secondary batteries to which the present invention is applicable is not particularly limited, and any shape such as coin, button, sheet, cylindrical, flat, or rectangular shape may be employed. The electrode assembly composed of a positive electrode, a negative electrode, and a separator may be of the wound type or layered-type. The battery size may be small as in compact, portable appliances or large as in electric vehicles. The lithium secondary battery of the present invention can be used as the power source for personal digital assistants, portable electronic appliances, smallsized power storage devices for home use, two-wheel motor vehicles, electric vehicles, hybrid electric vehicles, etc., and the uses thereof are not particularly limited.

## Claims

1. A negative electrode for a lithium secondary battery, comprising a sheet-shaped current collector and an active material layer carried on said current collector,
wherein said active material layer comprises a plurality of columnar particles,
said active material layer includes at least one selected from the group consisting of a compound containing silicon and oxygen, a compound containing silicon and nitrogen, an alloy of silicon and a metal element M that is not alloyable with lithium, and a combination thereof,
said columnar particles are inclined relative to the direction of the normal to said current collector, and
spaces exist among said columnar particles such that the ratio (porosity) P of all the pores including said spaces in said active material layer satisfies 10% ≤ P ≤ 70%.

2. The negative electrode for a lithium secondary battery in accordance with claim 1, wherein said columnar particles form an angle θ with the direction of the normal to said current collector, and 10° ≤ θ ≤ 80°.

3. The negative electrode for a lithium secondary battery in accordance with claim 1, wherein the difference between the area A of said current collector on which said active material layer is.carried and the area B of said active material layer orthogonally projected from said direction of the normal: A-B is 60% or less of the area A.

4. The negative electrode for a lithium secondary battery in accordance with claim 1, wherein said metal element M includes at least one selected from the group consisting of titanium, copper, and nickel.

5. The negative electrode for a lithium secondary battery in accordance with claim 1, wherein said compound containing silicon and oxygen has a composition represented by general formula (1): SiOₓ where 0 < x < 2.

6. A lithium secondary battery comprising:
a positive electrode capable of absorbing and desorbing lithium ions;
the negative electrode recited in any one of claims 1 to 5;
a separator interposed between said positive electrode and said negative electrode; and
a lithium-ion conductive electrolyte.

7. A method for producing a negative electrode for a lithium secondary battery, comprising:
(a) preparing a sheet-shaped current collector with a surface roughness Rz of 2 µm or more and 20 µm or less; and.
(b) projecting silicon to said current collector for deposition in an atmosphere of oxygen **and/or** nitrogen from a direction that forms an angle φ with the direction of the normal to said current collector, to form an active material layer containing said silicon and said oxygen **and/or** nitrogen, where 20° ≤ φ ≤ 85°.

8. The method for producing a negative electrode for a lithium secondary battery in accordance with claim 7,
wherein the step of projecting silicon to said current collector is performed by at least one selected from the group consisting of deposition, sputtering, and chemical vapor deposition.

9. The method for producing a negative electrode for a lithium secondary battery in accordance with claim 7,
wherein the atmosphere in said step (b) is an oxygen atmosphere, said active material layer includes a compound containing said silicon and oxygen, and said compound containing said silicon and oxygen has a composition represented by general formula (1): SiOₓ where 0 < x < 2.

10. A method for producing a negative electrode for a lithium secondary battery, comprising:
(a) preparing a sheet-shaped current collector with a surface roughness Rz of 2 µm or more and 20 µm or less; and
(b) projecting silicon and metal element M that is not alloyable with lithium to said current collector for deposition from a direction that forms an angle φ with the direction of the normal to said current collector, to form an active material layer containing said silicon and said metal element M, where 20° ≤ φ ≤ 85°.

11. The method for producing a negative electrode for a lithium secondary battery in accordance with claim 10,
wherein said metal element M includes at least one selected from the group consisting of titanium, copper, and nickel.

12. A method for producing a battery comprising the steps of:
preparing a positive electrode comprising a sheet-shaped positive electrode current collector and a positive electrode active material layer carried on said positive electrode current collector,
preparing a negative electrode comprising a sheet-shaped negative electrode current collector and a negative electrode active material layer carried on said negative electrode current collector according to the method in accordance with claim 7 or 10,
preparing a separator, and
allowing said positive electrode active material layer and said negative electrode active material layer opposed to each other with said separator interposed therebetween.

## Patentansprüche

1. Negative Elektrode für eine Lithium-Sekundärbatterie, umfassend einen sheetförmigen Stromabnehmer und eine auf dem Stromabnehmer getragene Aktivmaterialschicht,
wobei die Aktivmaterialschicht eine Vielzahl von säulenartigen Teilchen umfasst,
die Aktivmaterialschicht beinhaltet wenigstens eines ausgewählt aus der Gruppe bestehend aus einer Verbindung, die Silizium und Sauerstoff enthält, einer Verbindung, die Silizium und Stickstoff enthält, einer Legierung aus Silizium und einem Metallelement M, das nicht mit Lithium legierbar ist, und eine Kombination davon,
die säulenartigen Teilchen sind relativ zu der Richtung der Normalen zu dem Stromabnehmer geneigt, und
unter den säulenartigen Teilchen existieren Freiräume, sodass das Verhältnis (Porosität) P von all den Poren inklusive der Freiräume in der Aktivmaterialschicht 10% ≤ P ≤ 70% erfüllt.

2. Negative Elektrode für eine Lithium-Sekundärbatterie nach Anspruch 1, wobei die säulenartigen Teilchen einen Winkel θ mit der Richtung der Normalen zu dem Stromabnehmer bilden, und 10° ≤ θ ≤ 80°.

3. Negative Elektrode für eine Lithium-Sekundärbatterie nach Anspruch 1, wobei der Unterschied zwischen der Fläche A des Stromabnehmers, auf welchem die Aktivmaterialschicht getragen ist, und der Fläche B der Aktivmaterialschicht, die orthogonal von der Richtung der Normalen projiziert ist: A-B ist 60% oder weniger der Fläche A.

4. Negative Elektrode für eine Lithium-Sekundärbatterie nach Anspruch 1, wobei das Metallelement M wenigstens eines ausgewählt aus der Gruppe bestehend aus Titan, Kupfer und Nickel beinhaltet.

5. Negative Elektrode für eine Lithium-Sekundärbatterie nach Anspruch 1, wobei die Verbindung, die Silizium und Sauerstoff enthält, eine Zusammensetzung aufweist, die durch die allgemeine Formel (1) dargestellt ist: SiOₓ,
wobei 0 < x < 2.

6. Lithium-Sekundärbatterie, umfassend:
eine positive Elektrode, die geeignet ist zum Absorbieren und Desorbieren von Lithiumionen;
die negative Elektrode, die in einem der Ansprüche 1 bis 5 rezitiert ist;
einen Separator, der zwischen der positiven Elektrode und der negativen Elektrode eingefügt ist; und
einen Lithiumionen-leitenden Elektrolyt.

7. Verfahren zur Herstellung einer negativen Elektrode für eine Lithium-Sekundärbatterie, umfassend:
(a) Anfertigen eines sheetförmigen Stromabnehmers mit einer Oberflächenrauheit Rz von 2 µm oder mehr und 20 µm oder weniger; und
(b) Projizieren von Silizium auf den Stromabnehmer zur Abscheidung in einer Atmosphäre von Sauerstoff und/oder Stickstoff von einer Richtung, die einen Winkel φ mit der Richtung der Normalen zu dem Stromabnehmer bildet, um eine Aktivmaterialschicht zu bilden, die das Silizium und den Sauerstoff und/oder Stickstoff enthält, wobei 20° ≤ φ ≤ 85°.

8. Verfahren zur Herstellung einer negativen Elektrode für eine Lithium-Sekundärbatterie nach Anspruch 7,
wobei der Schritt des Projizierens von Silizium auf den Stromabnehmer durch wenigstens eines ausgewählt aus der Gruppe bestehend aus Abscheidung, Sputtern und Gasphasenabscheidung durchgeführt wird.

9. Verfahren zur Herstellung einer negativen Elektrode für eine Lithium-Sekundärbatterie nach Anspruch 7,
wobei die Atmosphäre in dem Schritt (b) eine Sauerstoffatmosphäre ist, die Aktivmaterialschicht eine Verbindung beinhaltet, die das Silizium und Sauerstoff enthält, und die Verbindung, die das Silizium und Sauerstoff enthält, eine Zusammensetzung aufweist, die durch eine allgemeine Formel (1) dargestellt ist: SiOₓ, wobei 0 < x < 2.

10. Verfahren zur Herstellung einer negativen Elektrode für eine Lithium-Sekundärbatterie, umfassend:
(a) Anfertigen eines sheetförmigen Stromabnehmers mit einer Oberflächenrauheit Rz von 2 µm oder mehr und 20 µm oder weniger; und
(b) Projizieren von Silizium und eines Metallelements M, das nicht mit Lithium legierbar ist, auf den Stromabnehmer zur Abscheidung von einer Richtung, die einen Winkel φ mit der Richtung der Normalen zu dem Stromabnehmer bildet, um eine Aktivmaterialschicht zu bilden, die das Silizium und das Metallelement M enthält, wobei 20° ≤ φ ≤ 85°.

11. Verfahren zur Herstellung einer negativen Elektrode für eine Lithium-Sekundärbatterie nach Anspruch 10,
wobei das Metallelement M wenigstens eines ausgewählt aus der Gruppe bestehend aus Titan, Kupfer und Nickel beinhaltet.

12. Verfahren zur Herstellung einer Batterie, umfassend die Schritte:
Anfertigen einer positiven Elektrode, die einen sheetförmigen Positivelektrodenstromabnehmer und eine Positivelektrodenaktivmaterialschicht, die auf dem Positivelektrodenstromabnehmer getragen ist, umfasst,
Anfertigen einer negativen Elektrode, die einen sheetförmigen Negativelektrodenstromabnehmer und eine Negativelektrodenaktivmaterialschicht, die auf dem Negativelektrodenstromabnehmer getragen ist, umfasst, gemäß dem Verfahren in Übereinstimmung mit Anspruch 7 oder 10,
Anfertigen eines Separators, und
Ermöglichen, dass sich die Positivelektrodenmaterialschicht und die Negativelektrodenmaterialschicht mit dem Separator dazwischen eingefügt gegenüberstehen.

## Revendications

1. Electrode négative pour une batterie secondaire au lithium, comprenant un collecteur de courant en forme de feuille et une couche de matière active portée sur ledit collecteur de courant,
dans laquelle ladite couche de matière active comprend plusieurs particules colonnaires,
ladite couche de matière active inclut au moins l'un sélectionné du groupe constitué d'un composé contenant du silicium et de l'oxygène, un composé contenant du silicium et de l'azote, un alliage de silicium et un élément métallique M qui ne peut pas s'allier au lithium, et une combinaison de ceux-ci,
lesdites particules colonnaires sont inclinées par rapport à la direction de la normale audit collecteur de courant, et
des espaces existent parmi lesdites particules colonnaires de sorte que le rapport (porosité) P de tous les pores incluant lesdits espaces dans ladite couche de matière active remplissent la relation 10% ≤ P ≤ 70%.

2. Electrode négative pour une batterie secondaire au lithium selon la revendication 1, dans laquelle lesdites particules colonnaires forment un angle θ avec la direction de la normale audit collecteur de courant, et 10° ≤ θ ≤ 80°.

3. Electrode négative pour une batterie secondaire au lithium selon la revendication 1, dans laquelle la différence entre la surface A dudit collecteur de courant sur laquelle ladite couche de matière active est portée et la surface B de ladite couche de matière active projetée orthogonalement depuis ladite direction de la normale: A-B est de 60% de la surface A ou moins.

4. Electrode négative pour une batterie secondaire au lithium selon la revendication 1, dans laquelle ledit élément métallique M inclut au moins l'un sélectionné parmi le groupe constitué de titane, cuivre, et nickel.

5. Electrode négative pour une batterie secondaire au lithium selon la revendication 1, dans laquelle ledit composé contenant du silicium et de l'oxygène a une composition représentée par la formule générale (1): SiOₓ où 0 < x < 2.

6. Batterie secondaire au lithium comprenant:
une électrode positive capable d'absorber et de désorber des ions lithium;
l'électrode négative selon l'une quelconque des revendications 1 à 5;
un séparateur interposé entre ladite électrode positive et ladite électrode négative; et
un électrolyte conducteur d'ions lithium.

7. Procédé pour produire une électrode négative pour une batterie secondaire au lithium, comprenant le fait de :
(a) préparer un collecteur de courant en forme de feuille avec une rugosité de surface Rz de 2 µm ou plus et de 20 µm ou moins; et
(b) projeter du silicium vers ledit collecteur de courant pour un dépôt dans une atmosphère d'oxygène et/ou d'azote depuis une direction qui forme un angle Φ avec la direction de la normale audit collecteur de courant, pour former une couche de matière active contenant ledit silicium et ledit oxygène et/ou azote, où 20° ≤ Φ ≤ 85°.

8. Procédé pour produire une électrode négative pour une batterie secondaire au lithium selon la revendication 7,
où l'étape qui consiste à projeter du silicium vers ledit collecteur de courant est effectuée par au moins l'un sélectionné parmi le groupe de techniques de dépôt, pulvérisation, et dépôt chimique en phase vapeur.

9. Procédé pour produire une électrode négative pour une batterie secondaire au lithium selon la revendication 7,
dans lequel l'atmosphère dans ladite étape (b) est une atmosphère d'oxygène, ladite couche de matière active inclut un composé contenant lesdits silicium et oxygène, et ledit composé contenant lesdits silicium et oxygène a une composition représentée par la formule générale (1):SiOₓ où 0 < x < 2.

10. Procédé pour produire une électrode négative pour une batterie secondaire au lithium, comprenant le fait de:
(a) préparer un collecteur de courant en forme de feuille avec une rugosité de surface Rz de 2 µm ou plus et de 20 µm ou moins; et
(b) projeter du silicium et un élément métallique M qui ne peut pas s'allier au lithium audit collecteur de courant pour un dépôt depuis une direction qui forme un angle Φ avec la direction de la normale audit collecteur de courant, pour former une couche de matière active contenant ledit silicium et ledit élément métallique M, où 20° ≤ Φ ≤ 85°.

11. Procédé pour produire une électrode négative pour une batterie secondaire au lithium selon la revendication 10,
dans lequel ledit élément métallique M inclut au moins l'un sélectionné parmi le groupe constitué de titane, cuivre, et nickel.

12. Procédé pour produire une batterie comprenant les étapes qui consistent à:
préparer une électrode positive comprenant un collecteur de courant d'électrodes positives en forme de feuille et une couche de matière active d'électrodes positives portée sur ledit collecteur de courant d'électrodes positives,
préparer une électrode négative comprenant un collecteur de courant d'électrodes négatives en forme de feuille et une couche de matière active d'électrodes négatives portée sur ledit collecteur de courant d'électrodes négatives selon le procédé selon la revendication 7 ou 10,
préparer un séparateur, et
permettre à ladite couche de matière active d'électrodes positives et à ladite couche de matière active d'électrodes négatives d'être opposées l'une à l'autre avec ledit séparateur interposé entre les deux.
